(19) Europäisches Patentamt
European Patent Office
Office européen des brevets

(11) **EP 3 642 609 B1**

(12) **FASCICULE DE BREVET EUROPEEN**

(45) Date de publication et mention de la délivrance du brevet:
**01.04.2026 Bulletin 2026/14**

(21) Numéro de dépôt: **18737683.5**

(22) Date de dépôt: **19.06.2018**

(51) Classification Internationale des Brevets (IPC):
**G01N 29/04** *(2006.01)*  **G01N 29/22** *(2006.01)*
**G01N 29/38** *(2006.01)*  **G01N 29/44** *(2006.01)*
**G01N 29/275** *(2006.01)*

(52) Classification Coopérative des Brevets (CPC):
**G01N 29/4463; G01N 29/043; G01N 29/221;**
**G01N 29/275; G01N 29/38;** G01N 2291/0289;
G01N 2291/044; G01N 2291/056; G01N 2291/2634

(86) Numéro de dépôt international:
**PCT/FR2018/051459**

(87) Numéro de publication internationale:
**WO 2018/234678 (27.12.2018 Gazette 2018/52)**

(54) **DISPOSITIF ET MÉTHODE POUR LE CONTRÔLE NON DESTRUCTIF D'UN PRODUIT TUBULAIRE À FORME COMPLEXE**

VORRICHTUNG UND VERFAHREN ZUR ZERSTÖRUNGSFREIEN PRÜFUNG EINES ROHRFÖRMIGEN PRODUKTS MIT EINER KOMPLEXEN FORM

SYSTEM AND METHOD FOR NON-DESTRUCTIVE INSPECTION OF A TUBULAR PRODUCT WITH A COMPLEX SHAPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2017 FR 1755793**

(43) Date de publication de la demande:
**29.04.2020 Bulletin 2020/18**

(73) Titulaire: **Vallourec Tubes France**
**92190 Meudon (FR)**

(72) Inventeur: **LAZZARI, Olivier**
**59300 Valenciennes (FR)**

(74) Mandataire: **Casalonga**
**Casalonga & Partners**
**Bayerstraße 71/73**
**80335 München (DE)**

(56) Documents cités:
DE-A1- 102012 112 119    FR-A1- 2 796 153
FR-A1- 2 917 832        FR-A1- 3 000 212
GB-A- 1 181 608

**Description**

L'invention concerne le domaine des contrôles non destructifs de produits métallurgiques, en particulier de produits tubulaires et plus particulièrement les produits tubulaires présentant des variations de diamètres internes et/ou externes.

Des tubes de grande longueur sont largement utilisés dans différents domaines d'application. On peut citer par exemple la production électrique, où l'on utilise des tubes dits "chaudières", aussi connus par l'équivalent anglais de "boilers", le pétrole et le gaz, où l'on emploie des tubes pour le forage, l'extraction et le transport ("line pipes"), ou encore la construction mécanique, que ce soit en génie civil ou dans les secteurs de l'automobile et de l'aéronautique.

Pour mieux faire comprendre l'invention, celle-ci est décrite dans le contexte de produits généralement tubulaires, notamment des tubes, en tant qu'exemples de produits métallurgiques. Pour autant, l'invention a vocation à s'appliquer plus largement sur des profils qui présentent des variations géométriques de leurs parois le long de leur axe principal.

Selon un aspect, l'invention a aussi pour vocation à s'appliquer sur des profils tubulaires qui présentent des variations d'épaisseur sur leur circonférence, par exemple les tubes de structure évidés à section carrée ou rectangulaire, appelés profils MSH, ou encore des tubes profilés à section hexagonale, ou encore les tubes de sections extérieure circulaire et intérieure hexagonale, ou encore d'autres types de section qui entraînent des variations intentionnelles de l'épaisseur locale du tube.

Comme la plupart des produits métallurgiques, les tubes sont susceptibles de présenter des défauts liés à leur fabrication, tels que des inclusions de matière dans l'acier, des fissures sur une surface interne ou une surface externe, ou encore des porosités. De manière générale, toute hétérogénéité dans la matrice d'acier est vue comme une imperfection qui est susceptible de nuire à la résistance mécanique du tube en service.

C'est pourquoi on contrôle les tubes métalliques dès après leur fabrication, non seulement pour y détecter d'éventuels défauts, mais aussi, le cas échéant, pour déterminer des informations utiles à l'évaluation de la dangerosité de ces défauts, notamment leur taille, leur profondeur, leur position, leur nature ou encore leur orientation, et la satisfaction de ces tubes à des standards internationaux.

On utilise en particulier des techniques de contrôle à l'aide d'ondes ultrasonores. On fait se propager des ondes ultrasonores dans le tube contrôlé, et l'on recherche, parmi les échos résultants, ceux qui ne peuvent être imputés à la géométrie du tube. Les inclusions ou les absences de matière constituent des variations au sein du milieu de propagation de l'onde, et génèrent de ce fait des échos lorsqu'ils sont frappés par des ondes ultrasonores. Ces variations peuvent être vues comme des imperfections.

L'intensité de l'écho produit par une imperfection dépend de l'angle selon lequel l'onde la frappe. Pour une direction de propagation de l'onde ultrasonore dans le tube, on détecte principalement les imperfections orientées de manière correspondante, c'est-à-dire perpendiculairement à la direction de propagation, avec une certaine tolérance toutefois, de l'ordre de quelques degrés, l'amplitude de cette tolérance se situant généralement entre 2 degrés et une dizaine de degrés selon les dispositifs choisis.

On qualifie de défaut une imperfection qui renvoie un écho d'amplitude supérieure à une valeur-seuil. On associe généralement à ce défaut une valeur d'orientation, qui peut se déduire de la direction d'inspection, qui est la direction imprimée à l'onde ultrasonore par le capteur ultrasonore émettant l'onde.

Cette valeur-seuil prédéfinie est fixée par étalonnage. On utilise classiquement en tant que défauts de référence, ou défauts-étalons, des entailles de position (profondeur et orientation) et de dimensions connues, le plus souvent normalisées, ménagées dans un tube-échantillon.

Les différents types de défauts qui peuvent le plus souvent être recherchés lors de contrôles sont les suivants :

- Les défauts de surface :

  o Défauts longitudinaux interne ou externe. Ces défauts génèrent en réponse à un tir ultrasonore de direction sensiblement transversale (c'est-à-dire un tir se situant sensiblement dans un plan perpendiculaire à l'axe du tube, ou autrement dit dans une section droite du tube) un écho d'une amplitude supérieure à un seuil prédéfini.
  o Défauts transversaux interne ou externe, appelés aussi défauts travers. Ces défauts génèrent en réponse à un tir ultrasonore de direction généralement longitudinale, c'est-à-dire un tir se situant sensiblement dans un plan contenant l'axe du tube, un écho d'une amplitude dépassant un autre seuil prédéfini.
  o Défauts obliques. Ces défauts génèrent en réponse à un tir ultrasonore de direction généralement divergente par rapport au plan contenant le capteur et l'axe du tube, un écho d'une amplitude dépassant un autre seuil prédéfini. Un défaut oblique génère, en réponse à un tir d'orientation intermédiaire entre l'orientation longitudinale et le travers, un écho d'une amplitude dépassant un autre seuil prédéfini.

- Défauts à l'intérieur des parois, généralement appelés « dédoublures ». Ces défauts génèrent en réponse à un tir ultrasonore de direction généralement radiale, un écho d'une amplitude dépassant un seuil prédéfini.

En pratique, les imperfections ne sont pas purement longitudinales ou transversales, mais renvoient un écho plus ou moins important dans l'une ou l'autre de ces directions. L'orientation d'une imperfection peut être assimilée à l'orientation de sa plus grande surface de réflexion.

La durée du contrôle dépend principalement du nombre de tirs effectués, du temps nécessaire au trajet des ondes ultrasonores dans le tube, aller et retour, du temps de trajet dans l'éventuel couplant d'interface entre le capteur et l'acier et, dans une certaine mesure, de celui du traitement des signaux captés en retour.

Pour concilier les impératifs liés aux cadences de production et à la sécurité, on a pris l'habitude de limiter le nombre de tirs d'ultrasons et de ne rechercher, dans chaque tube, que les défauts présentant certaines orientations particulières.

Limiter le nombre de tirs permet également de limiter le traitement électronique de données, et donc de limiter les coûts du matériel nécessaire au traitement de données.

Il existe une variété de capteurs ultrasonores généralement différenciés par leur complexité.

Le premier type de transducteur est le transducteur mono-élément (ou *single crystal transducer).* Ce type de capteur a une direction d'émission d'onde ultrasonore fixe par construction. Pour les besoins de mise en œuvre de l'invention, ce capteur peut être motorisé de manière à former un capteur directionnel pouvant émettre une onde ultrasonore avec une orientation d'émission $\theta e$ choisie, c'est-à-dire permettant de modifier l'orientation d'émission $\theta e$.

Un deuxième type de transducteur est le transducteur ultrasonore dit "phased array", ou "en réseau et commandé séquentiellement" en français, aussi appelé "transducteur linéaire multi-éléments". Ce type de transducteur comprend une pluralité d'éléments transducteurs électroacoustiques, sous la forme d'éléments piézoélectriques, répartis sur une face active du transducteur, selon une direction principale. Par exemple, ces éléments piézoélectriques peuvent être disposés de manière alignée les uns avec les autres et former ce que l'on appelle parfois une "barrette de transducteurs". Les transducteurs présentant une telle répartition sont dits "de dimension une". Les éléments du transducteur sont excités simultanément ou avec des décalages temporels, séquentiellement, selon une loi temporelle, de manière à combiner les ondes ultrasonores ainsi produites pour former un faisceau d'ondes défléchi, éventuellement focalisé (point de focalisation en avant du capteur), qui permet d'inspecter un tube quant à l'existence de défauts orientés selon une direction correspondante.

On connaît également un dispositif de contrôle par ondes ultrasonores comprenant un transducteur de type "phased array" de dimension une, dont les transducteurs élémentaires sont répartis autour du tube à contrôler. Un tel dispositif permet de détecter des défauts longitudinaux et des dédoublures, mais uniquement dans un tronçon réduit du tube. Les capteurs à réseau de phase de dimension un sont les plus couramment utilisés car ils sont plus économiques à mettre en œuvre et permettent une plus grande rapidité d'inspection.

On connaît également par WO2014/096700 un dispositif de contrôle de produits métallurgiques comprenant un transducteur ultrasonore ayant une pluralité de transducteurs élémentaires (29) opérables indépendamment les uns des autres et répartis selon un motif de dimension deux. Ce type de transducteur permet de détecter des défauts de toute inclinaison à l'aide d'un unique capteur en permettant notamment d'orienter un tir sans restriction d'orientation par rapport à une direction principale du capteur.

On connaît également les capteurs EMAT pouvant générer des ondes ultrasoniques par des moyens électromagnétiques. Ces capteurs permettent généralement d'éviter le recours à un moyen de couplage entre le capteur et l'élément à inspecter.

On connaît encore par WO 2003/50527 une installation de contrôle non destructif pour des produits métallurgiques dans laquelle on utilise un capteur de type "phased array" de dimension une. Chaque élément transducteur est excité une fois puis un circuit de traitement analyse la réponse globale du tube à cette unique émission, que l'on appelle un "tir" dans la technique. À partir d'un tir effectué selon la direction transversale du tube, on est capable de déterminer la présence non seulement de défauts disposés perpendiculairement à cette direction, mais également de défauts présentant une inclinaison par rapport à cette direction perpendiculaire comprise entre plus et moins 10°.

Dans la suite du présent texte, un transducteur ultrasonore pourra être désigné indifféremment par les termes capteur, ou palpeur ou transducteur, bien connus de l'homme du métier.

En pratique sur un banc de test de produit tubulaire, on utilise souvent trois transducteurs : deux transducteurs dédiés à la détection de défauts orientés longitudinalement qui permettent de réaliser un contrôle dans les deux sens de parcours, ou présentant une inclinaison par rapport à cette direction longitudinale comprise entre plus ou moins 20°, et un troisième capteur pour détecter les défauts orientés transversalement par rapport au produit tubulaire. On utilise couramment un quatrième capteur pour contrôler la présence de dédoublures et mesurer l'épaisseur de paroi du produit tubulaire. Il est possible d'avoir un cinquième capteur dédié à la détection de défauts travers en complément du troisième capteur susmentionné pour effectuer la détection dans les deux sens de parcours longitudinal d'un produit tubulaire.

On connaît par FR 2 917 832 A1 un système pour le contrôle non-destructif d'un axe d'essieu présentant des variations de diamètre intérieur et extérieur comprenant plusieurs transducers ultrasonores qui peuvent être déplacés longitudinalement et transversalement sur différentes portions de l'essieu afin de réaliser la détection ultrasonore de défauts dans ces portions inspectées.

On connaît également par FR 3 000 212 un dispositif de contrôle ultrasonore capable d'inspecter un produit métallurgique en y détectant des défauts de toute orientation. Le dispositif en question utilise un unique capteur, excité un nombre réduit de fois, ce qui permet de conserver une bonne cadence de contrôle.

Selon certains modes de réalisations connus, les capteurs sont fixes et le tube est animé d'un mouvement hélicoïdal.

Selon d'autres modes de réalisation connus, les capteurs ou palpeurs à ultrasons sont entraînés en rotation à une vitesse de quelques milliers de tours par minute, autour d'un tube défilant à une vitesse linéaire qui peut aller jusqu'à environ 1 mètre par seconde.

Dans d'autres modes de réalisation connus par exemple dans FR 2 796 153, on utilise un capteur constitué d'une multiplicité d'éléments transducteurs ultrasonores entourant le tube. L'électronique permet de faire tourner l'origine du faisceau ultrasonore autour du tube par commutation des groupes d'éléments excités, et de remplacer, par voie de conséquence, la rotation mécanique des capteurs, décrite ci-dessus, par un balayage électronique.

Ces trois types d'installations, toutes bien connues, de l'homme du métier sont respectivement appelées : installations dites "à tête tournante", installations dites "à tube tournant", et installations à capteur encerclant multi-éléments. Dans le cas d'utilisation de capteurs opérant en balayage électronique, la rotation relative tube/capteurs est virtuelle. Telle qu'utilisée ici, l'expression "mouvement relatif de rotation/translation entre le tube et l'agencement de transducteurs" couvre le cas où la rotation relative est virtuelle.

Toutes ces techniques sont utilisées aujourd'hui sur des produits tubulaires à section dite constante. On entend par produit tubulaire à section constante les produits tubulaires dont l'épaisseur est constante, ou du moins dont l'épaisseur a une valeur nominale constante et admettant une faible variation dimensionnelle inhérente aux procédés d'obtention de ces tubes, donc des variations non intentionnelles, variations évoluant à l'intérieur de valeurs de tolérances définies par les normes. Par exemple les tolérances dimensionnelles des tubes API sont de l'ordre de -12,5% à +12,5% environ de l'épaisseur nominale sur les diamètres et épaisseurs nominaux les plus courants.

Cependant, les techniques d'obtention de produits tubulaires ont récemment évolué et permettent maintenant d'obtenir des tubes en acier, éventuellement de grandes longueurs et de grands diamètres, présentant des formes complexes, c'est-à-dire présentant des variations intentionnelles d'épaisseur et/ou des variations intentionnelles de leurs diamètres internes et/ou diamètres externes, conduisant notamment à des variations supérieures aux tolérances telles que celles données précédemment de -12,5% à +10% de l'épaisseur nominale selon la norme API.

Or les dispositifs de contrôle ultrasonore de la présence de défaut dans des produits tubulaires ne sont pas adaptés pour détecter des défauts dans des produits tubulaires présentant ces formes complexes. En particulier, les dispositifs automatiques de contrôle ultrasonore pour contrôler les produits tubulaires dès après leur fabrication à une cadence industrielle ne sont particulièrement pas adaptés à l'inspection de produits tubulaires à formes complexes.

Il existe donc un besoin de mieux détecter les éventuels défauts au sein de ces produits tubulaires à formes complexes.

Le demandeur a mis au point des techniques de contrôle non destructif de produits tubulaires en acier, éventuellement de grandes longueurs, c'est-à-dire en général jusqu'à 20 mètres ; et de grands diamètres, c'est-à-dire de diamètres allant jusqu'à 30 pouces, c'est-à-dire jusqu'à environ 77 cm ; ayant des formes complexes, c'est-à-dire présentant des variations de diamètres extérieurs et/ou de diamètres intérieurs. Par exemples des variations dimensionnelles peuvent être obtenues par rengraissement du tube. Ces valeurs de longueur et diamètres ne sont pas limitatives des domaines d'application de la présente invention.

Ces tubes peuvent présenter différentes typologies de tronçons :

- un tronçon à épaisseur constante et à diamètres externe et interne constants,

- un tronçon à diamètre interne constant et à diamètre externe variant longitudinalement, entraînant une augmentation ou une réduction d'épaisseur de la paroi du tube,

- un tronçon à diamètre externe constant et à diamètre interne variant longitudinalement, entraînant une augmentation ou une réduction d'épaisseur de la paroi du tube,

- un tronçon à diamètres externe et interne chacun variant, avec variation longitudinale ou non de l'épaisseur du tube.

Les bancs de contrôle automatiques actuels sont adaptés à la détection de défauts sur des tubes dont les diamètres externe et interne sont invariants, c'est-à-dire des tubes présentant uniquement un tronçon à épaisseur constante et à diamètres externe et interne constants mais le demandeur a constaté que ces bancs connus ne sont pas adaptés pour le contrôle complet de produits tubulaires comportant des tronçons de typologie différentes, dont les diamètres externes et/ou internes varient le long de leur axe. En effet, seul un tronçon principal à diamètre externe et interne invariant peut être contrôlé avec un banc de contrôle automatique de l'état de l'art.

En effet, le demandeur a constaté que la détection d'un défaut par le principe de l'émission et de la réception d'un faisceau ultrasonore est basée sur une mesure représentative du trajet d'un faisceau ultrasonore, en particulier de la partie du faisceau ultrasonore incident qui arrive (revient) sur le capteur après avoir été réfléchi par un défaut. Ce trajet de tir ultrasonore présente les caractéristiques importantes : la distance de trajet et l'orientation de la trajectoire, l'amplitude du faisceau. Ces caractéristiques sont fixées pour chaque type de défaut et chaque modèle de produit tubulaire à section dite constante. Par modèle de tube on entend généralement un ensemble de données que sont le diamètre externe nominal, le diamètre interne nominal ou l'épaisseur nominale, l'acier utilisé, etc....

Le demandeur a constaté que dès qu'un produit tubulaire présente une section non constante, c'est-à-dire avec des tronçons de typologies différentes telles que celles exposées ci-avant, la détection par les dispositifs connus est inopérante : l'écho du tir ultrasonore mesuré sur le transducteur peut avoir une amplitude trop faible pour être détectée, voire n'est pas détectée du tout.

Le demandeur a constaté que la variation de la section d'un produit tubulaire introduit des incertitudes et des écarts dans le trajet d'un faisceau ultrasonore. On verra que la présente invention vient compenser l'influence de la variation de section d'un produit tubulaire afin de permettre une inspection industrielle optimisée améliorant la détection des défauts sur un produit tubulaire à section non constante.

La présente invention permet donc d'améliorer la détectabilité d'un défaut malgré une variation de dimension et/ou de forme des parois d'un produit tubulaire. On le désigne alors sous la terminologie de « produit tubulaire complexe ».

Selon un aspect de l'invention, le dispositif et la méthode selon l'invention fournissent une solution en adaptant les paramètres de la consigne d'émission d'une onde ultrasonore d'un transducteur en fonction de la localisation du transducteur, en particulier la position longitudinale du capteur, en faisant varier une orientation d'émission du transducteur, ou encore en faisant varier un gain à l'émission du transducteur.

Selon un autre aspect de l'invention, le dispositif et la méthode selon l'invention fournissent une solution en adaptant les paramètres de réception d'un signal ultrasonore en fonction de la localisation longitudinale du transducteur, par exemple le gain en réception ou encore la position d'une fenêtre temporelle d'acquisition du signal d'écho.

Selon encore un autre aspect de l'invention, le dispositif et la méthode selon l'invention fournissent une solution en adaptant les paramètres de la consigne d'émission d'une onde ultrasonore d'un transducteur et/ou les paramètres de réception d'un signal ultrasonore en fonction de la localisation circonférentielle du transducteur, comme l'orientation d'émission, le gain en émission ou en réception ou encore la position d'une fenêtre temporelle d'acquisition du signal d'écho.

- les figures 1 et 2 montrent une installation classique de contrôle de produits métallurgiques, vue respectivement de face et de côté ;
- la figure 3 illustre un principe d'insonification d'une paroi de tube par un capteur à ultrasons ;
- la figure 4 illustre une vue schématique en coupe d'une paroi d'un tube de forme complexe à diamètres externe et interne variants et illustre un tir d'un transducteur ultrasonore sur un défaut transversal ;
- la figure 5 illustre un A-scan d'un tir ultrasonore et de son écho dans le temps ;
- les figures 6a-c montrent un détail de section d'un tube échantillon à section variante muni de défauts longitudinaux et deux graphiques comparatifs des réponses de tirs ultrasonores d'un dispositif de l'état de l'art et d'un mode de réalisation de l'invention, selon les aspects du rapport signal sur bruit des échos ultrasonores et de l'amplitude des échos ultrasonores ;
- les figures 7a-e montrent un détail de section d'un tube échantillon à section variante muni de défauts transversaux et des graphiques comparatifs de la qualité des réponses des tirs ultrasonores sur des défauts transversaux entre un dispositif de l'état de l'art et un dispositif selon un mode de réalisation de l'invention, selon les aspects du rapport signal sur bruit des échos ultrasonores et de l'amplitude des échos ultrasonores et ce selon deux sens d'inspection ;
- les figures 8a-c montrent un détail de section d'un tube échantillon à section variante muni de défauts de type trou à fond plat ; ainsi que des graphiques comparatifs de la qualité des réponses des tirs ultrasonores sur des défauts à fond plat entre un dispositif de l'état de l'art et un dispositif selon un mode de réalisation de l'invention, selon les aspects du rapport signal sur bruit des échos ultrasonores, puis de l'amplitude des échos ultrasonores ;
- la figure 9 représente un exemple de mise en œuvre d'un mode de réalisation de l'invention sur un échantillon muni de défauts type entailles longitudinales internes et le C-scan correspondant obtenu;
- la figure 10 représente de manière analogue à la figure 9 un autre exemple de mise en œuvre d'un mode de réalisation de l'invention et des résultats correspondants obtenus sur la détection de défauts transversaux internes dans un sens de détection ;
- la figure 11 représente de manière analogue à la figure 9 un autre exemple de mise en œuvre d'un mode de réalisation de l'invention et des résultats correspondants obtenus sur la détection de défauts transversaux internes dans un sens de détection ;

- la figure 12 est un schéma de principe d'une voie d'acquisition et d'une partie de l'électronique de traitement selon un mode de réalisation de l'invention.
- la figure 13 est un schéma de principe d'une voie d'acquisition et d'une partie de l'électronique de traitement selon un autre mode de réalisation de l'invention.

Les dessins et les annexes comprennent des éléments de caractère certain. Ils pourront donc non seulement servir à la description de l'invention mais encore à sa définition, le cas échéant.

Par la suite, on décrira l'invention principalement sous l'aspect d'une variation de paramètres d'inspection en fonction de la position longitudinale du transducteur, correspondant à un mode de réalisation préféré de l'invention. Cependant, l'invention a aussi vocation à s'appliquer à une variation de paramètres d'inspection en fonction de la position circonférentielle du transducteur, en combinaison ou non avec une variation de ces paramètres en fonction de la position longitudinale du capteur.

L'invention se rapporte à un dispositif automatique de contrôle non-destructif pour la détection de défauts d'un produit tubulaire complexe (3), comprenant :

- au moins un transducteur ultrasonore (5) ayant une position définie par une position longitudinale (L) et une position circonférentielle (A) le long du produit tubulaire complexe (3) et agencé pour émettre un faisceau ultrasonore (Em) ayant une orientation d'émission $\theta e_i(L, A)$ ;
- une électronique de commande et de traitement (6) comprenant un circuit pour exciter le capteur et capter des signaux de retour et

    - au moins un étage d'amplification (21,31) avec un gain ($G_i(L ; A)$),
    - un module de filtre temporel (24) configuré pour appliquer un filtre temporel ($FT_i(L ; A)$) sur un signal d'écho (Dv, Ds),

et l'électronique de commande et de traitement (6) est configurée pour définir au moins un paramètre de tirs ultrasonores (Vi) en fonction de la position longitudinale (L) et/ou circonférentielle (A) du transducteur ultrasonore de manière à capter des défauts dans la paroi du tube, ledit au moins un paramètre étant choisi parmi l'orientation d'émission du tir ($\theta e_i(L ; A)$), le gain ($G_i(L ; A)$) ou la position du filtre temporel ($FT_i(L ; A)$).

Selon un aspect de l'invention, l'électronique de commande et de traitement (6) peut être configurée pour définir au moins deux paramètres de tirs ultrasonores (Vi) en fonction de la position circonférentielle (A) du au moins un transducteur ultrasonore (5) de manière à capter des défauts dans la paroi du tube, ledit au moins un paramètre étant choisi parmi l'orientation d'émission du tir ($\theta e_i(L ; A)$), le gain ($G_i(L ; A)$) ou la position du filtre temporel ($FT_i(L ; A)$).

Alternativement, l'électronique de commande et de traitement (6) peut être configurée pour définir au moins deux paramètres de tirs ultrasonores (Vi) en fonction de la position longitudinale (L) du au moins un transducteur ultrasonore (5) de manière à capter des défauts dans la paroi du tube, ledit au moins un paramètre étant choisi parmi l'orientation d'émission du tir ($\theta e_i(L ; A)$), le gain ($G_i(L ; A)$) ou la position du filtre temporel ($FT_i(L ; A)$).

Selon un aspect, l'électronique de commande et de traitement (6) est configurée pour définir l'orientation d'émission du tir ($\theta e_i(L ; A)$), le gain ($G_i(L ; A)$) et la position du filtre temporel ($FT_i(L ; A)$) de tirs ultrasonores (Vi) en fonction de la position longitudinale (L) du au moins un transducteur ultrasonore (5). L'électronique de commande et de traitement (6) peut aussi être configurée pour également définir au moins un paramètre choisi parmi l'orientation d'émission du tir ($\theta e_i(L ; A)$), le gain ($G_i(L ; A)$) et la position du filtre temporel ($FT_i(L ; A)$) de tirs ultrasonores (Vi) en fonction de la position circonférentielle (A) du au moins un transducteur ultrasonore (5).

En complément, le dispositif peut comprendre au moins un capteur de position (7a) pour déterminer la position longitudinale (L) du au moins un transducteur ultrasonore 5 relativement par rapport au produit tubulaire complexe (3). Alternativement, le dispositif peut comprendre au moins un capteur de position (7a) pour déterminer la position longitudinale (L) et la position circonférentielle (A) du au moins un transducteur ultrasonore 5 relativement par rapport au produit tubulaire complexe (3).

Le au moins un capteur de position (7a) peut être choisi parmi un codeur incrémental, un codeur à roue crémaillère, un codeur linéaire, un codeur à fil, un vélocimètre laser, une roue codeuse ou un rapport de roue codeuse.

Alternativement, le dispositif peut comprendre au moins un temporisateur (7b) pour déterminer la position relative longitudinale (L) et circonférentielle (A) du transducteur ultrasonore 5.

Selon un autre aspect, le au moins un étage d'amplification (21,31) peut être un étage d'amplification en émission (21) ayant un gain en émission ($Ge_i(L ; A)$) et l'électronique de commande et de traitement (6) est configurée pour faire varier ledit gain en émission ($Ge_i(L ; A)$) en fonction de la position longitudinale (L) du transducteur ultrasonore (5).

Dans une variante, le au moins un étage d'amplification (21,31) peut être un étage d'amplification en réception (31) ayant un gain en réception ($Gr_i(L ; A)$) et l'électronique de commande et de traitement (6) est configurée pour faire varier ledit gain en réception ($Gr_i(L ; A)$) en fonction de la position longitudinale (L) du transducteur ultrasonore (5).

Dans une autre variante le dispositif peut comprendre un étage d'amplification en émission (21) ayant un gain en émission ($Ge_i(L ; A)$) et un étage d'amplification en réception (31) ayant un gain en réception ($Gr_i(L ; A)$) et dans lequel l'électronique de commande et de traitement (6) est configurée pour faire varier le gain en émission ($Gr_i(L ; A)$) ou le gain en réception ($Gr_i(L ; A)$) en fonction de la position longitudinale (L) du transducteur ultrasonore (5).

Selon un autre aspect, l'électronique de commande et de traitement (6) peut comprendre un module de mémoire paramétrique (MEMp) capable de stocker des données sous forme d'association entre au moins une position longitudinale (L) d'un au moins transducteur ultrasonore (5) et au moins un jeu de données correspondant à des paramètres d'orientation d'émission du tir ($\theta e_i(L ; A)$), de gain ($G_i(L ; A)$) et/ou de position du filtre temporel ($FT_i(L ; A)$).

Aussi, l'électronique de commande et de traitement (6) peut comprendre un module de mémoire paramétrique (MEMp) capable de stocker des données sous forme d'association entre au moins une position circonférentielle (A) d'un au moins transducteur ultrasonore (5) et au moins un jeu de données correspondant à des paramètres d'orientation d'émission du tir ($\theta e_i(L ; A)$), de gain ($G_i(L ; A)$) et/ou de position du filtre temporel ($FT_i(L ; A)$).

En complément, l'électronique de commande et de traitement (6) peut comprendre un module de mémoire paramétrique (MEMp) capable de stocker des données sous forme d'association entre des couplets de position longitudinale et circonférentielle (L ; A) du transducteur ultrasonore 5 et au moins un jeu de données correspondant à des paramètres d'orientation d'émission du tir ($\theta e_i(L ; A)$), de gain ($G_i(L ; A)$) et de position du filtre temporel ($FT_i(L ; A)$).

Selon un aspect de l'invention, le module de mémoire paramétrique (MEMp) peut comprendre au moins un jeu de données correspondant à des paramètres de gain ($G_i(L ; A)$) sous la forme de paramètres de gain en réception gain ($Ge_i(L ; A)$) et de gain en émission gain ($Gr_i(L ; A)$).

Selon un autre aspect de l'invention, l'électronique de commande et de traitement (6) peut être configurée pour émettre plusieurs tirs ultrasonores (Vi) pour une position du transducteur ultrasonore (5), les tirs ultrasonores (Vi) ayant des angles d'émission $\theta e_j(L)$ compris entre un angle d'orientation minimal de position $\theta e_{mini}(L)$ et un angle d'orientation maximal de position $\theta e_{max}i(L)$.

Ainsi, l'électronique de commande et de traitement (6) peut être agencée pour effectuer de 2 à 8 tirs ultrasonores (Vi) pour une position du au moins un transducteur ultrasonore (5).

Selon un aspect de l'invention, le au moins un transducteur ultrasonore (5) peut être une barre de transducteurs ultrasonores.

Selon un autre aspect de l'invention, le au moins un transducteur ultrasonore (5) peut être un capteur à réseau de phase.

L'invention porte également sur un procédé automatique de contrôle de produits tubulaires à diamètres extérieur ou intérieur variant comprenant les étapes suivantes :

a. on positionne au moins un transducteur ultrasonore (5) à une première position (P1)

b. on effectue un premier tir ultrasonore (Vi) en émettant un faisceau ultrasonore (Em) ayant une première orientation $\theta e_i(P1)$, et une première amplification en émission avec un premier gain en émission $Ge_i(P1)$,

c. on capte un écho renvoyé par le produit tubulaire complexe (3) et on transforme l'écho capté en un signal reçu auquel est appliqué un premier gain en réception $Gr_i(P1)$

d. On isole une partie du signal dans une première fenêtre temporelle ($FT_i(P1)$)

e. On effectue un deuxième tir ultrasonore en répétant les étapes a à d à une deuxième position (P2), avec des paramètres de deuxième tir ultrasonore comprenant une deuxième orientation $\theta e_i(P2)$, un deuxième gain émission $Ge_i(P2)$, un deuxième gain en réception $Gr_i(P2)$, une deuxième fenêtre temporelle ($FT_i(P2)$) et

l'un au moins des paramètres du deuxième tir ultrasonore parmi la deuxième orientation $\theta e_i(P2)$, le deuxième gain émission $Ge_i(P2)$, le deuxième gain en réception $Gr_i(P2)$, la deuxième fenêtre temporelle ($FT_i(P2)$) est différent de la première orientation $\theta e_i(P1)$, le premier gain en émission $Ge_i(P1)$, le premier gain en réception $Gr_i(P1)$ ou la première fenêtre temporelle ($FT_i(P1)$).

Selon un aspect du procédé, la première position (P1) comprend une première position longitudinale (L1) et une première position circonférentielle (A1) et l'étape e) est remplacée par l'étape f) dans laquelle on effectue un deuxième tir ultrasonore en répétant les étapes a) à d) à une deuxième position longitudinale (L2), avec des paramètres de deuxième tir ultrasonore comprenant une deuxième orientation $\theta e_i(L2)$, un deuxième gain émission $Ge_i(L2)$, un deuxième gain en réception $Gr_i(L2)$, une deuxième fenêtre temporelle ($FT_i(L2)$) et

l'un au moins des paramètres du deuxième tir ultrasonore parmi la deuxième orientation $\theta e_i(L2)$, le deuxième gain émission $Ge_i(L2)$, le deuxième gain en réception $Gr_i(L2)$, la deuxième fenêtre temporelle ($FT_i(L2)$) est différent de la première orientation $\theta e_i(P1)$, le premier gain en émission $Ge_i(P1)$, le premier gain en réception $Gr_i(P1)$ ou la première fenêtre temporelle ($FT_i(P1)$).

On comprend que lorsque l'électronique est configurée pour définir au moins un paramètre de tirs ultrasonores Vi

en fonction de la position longitudinale L du moyen d'émission ultrasonore de manière à capter des défauts dans la paroi du tube, ledit au moins un paramètre étant choisi parmi l'orientation d'émission du tir $\theta e_i(L)$, le gain $G_i(L)$ ou la position du filtre temporel $FT_i(L)$ ; alors l'électronique est configurée pour définir au moins un paramètre de tirs ultrasonores Vi à au moins une première position longitudinale L1 du moyen d'émission ultrasonore de manière à capter des défauts dans la paroi du tube, ledit au moins un paramètre étant choisi parmi l'orientation d'émission du tir $\theta e_i(L)$, le gain $G_i(L)$ ou la position du filtre temporel $FT_i(L)$, et en ce que l'électronique est aussi configurée pour définir à au moins une deuxième position longitudinale L2 au moins un paramètre choisi parmi l'orientation d'émission du tir $\theta e_i(L)$, le gain $G_i(L)$ ou la position du filtre temporel $FT_i(L)$ différent du ou des paramètres choisis à ladite au moins première position longitudinale L1.

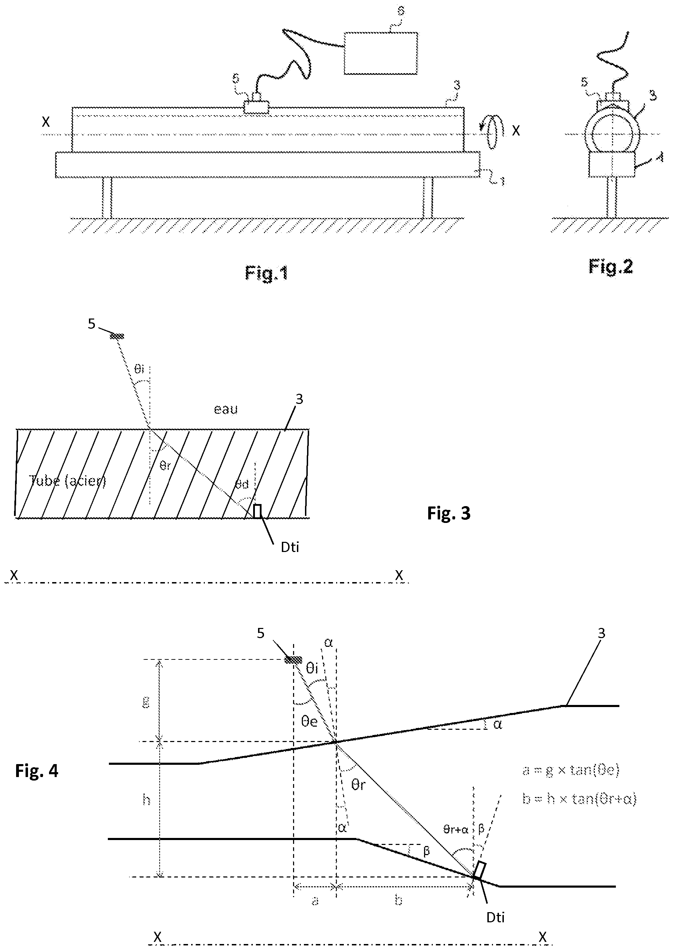

On fait référence aux figures 1 et 2.

Une installation de contrôle par ondes ultrasonores comprend un banc 1 supportant un produit tubulaire complexe 3 d'axe X à contrôler et un transducteur ultrasonore 5, positionné à proximité de la surface périphérique du produit tubulaire complexe 3, et relié à une électronique de commande et de traitement 6 comprenant un circuit électronique pour exciter le capteur.

Le produit tubulaire complexe 3 peut être animé d'un mouvement hélicoïdal de manière à ce que le dispositif de contrôle inspecte la totalité du produit tubulaire complexe 3.

En variante, le produit tubulaire complexe 3 peut être animé d'un mouvement de rotation uniquement par rapport au banc 1, et le transducteur 5 coulisse selon la direction longitudinale du banc 1, de manière synchrone par rapport au mouvement du produit tubulaire complexe 3, ou bien de manière séquentielle. Le transducteur 5 peut être monté sur un chariot mobile par rapport au banc 1. Selon une autre variante encore, le transducteur 5 peut tourner autour du produit tubulaire complexe 3, tandis que ce dernier est translaté par rapport au banc 1, de manière synchrone ou séquentielle. Il en résulte en général deux types de trajectoires d'inspection : une première trajectoire dite trajectoire hélicoïdale, ou une deuxième trajectoire dite incrémentale par tronçons unitaires. La trajectoire incrémentale par tronçons permet au capteur de balayer une circonférence du produit tubulaire avant d'avancer d'un incrément dans le sens longitudinal pour effectuer un nouveau balayage circonférentiel. Ce type de trajectoire peut présenter l'avantage de simplifier l'électronique, et par exemple de minimiser les changements de paramètres d'inspection lorsque ces derniers dépendent de la position longitudinale du transducteur.

Ces trajectoires permettent de contrôler l'ensemble du produit tubulaire complexe 3 à l'aide d'un capteur d'envergure réduite par rapport à la circonférence du produit tubulaire complexe 3. On pourrait en remplacement prévoir un nombre plus important de capteurs, disposés en couronne autour du produit tubulaire complexe 3, et assurer une séquence de tir qui garantisse un recouvrement lorsque le produit tubulaire complexe 3 coulisse par rapport au transducteur 5.

Un milieu de couplage, ou "couplant" dans la technique, peut être intercalé entre le transducteur 5 et la surface périphérique du produit tubulaire complexe 3, par exemple sous forme de gel ou de l'eau. En variante, l'installation peut comprendre un caisson rempli d'eau, ou de tout autre médium de couplage liquide, dans lequel sont immergés le produit tubulaire complexe 3 et le transducteur 5. Dans une autre variante, l'installation peut comprendre un dispositif à jet d'eau, le flux d'eau constituant alors le medium de couplage.

L'installation est destinée à inspecter le produit tubulaire complexe 3 pour y vérifier l'existence de défauts d'orientations différentes les unes des autres. La direction d'une d'inspection correspond à l'orientation, dans le produit tubulaire complexe 3, des défauts recherchés.

Pour pouvoir distinguer, dans les réponses du produit tubulaire complexe 3, des échos résultant de défauts de ceux résultant d'imperfections, l'installation de contrôle doit être étalonnée, pour chacune des directions d'inspection.

On fait maintenant référence à la figure 3, représentant un produit tubulaire à section constante d'axe X muni d'un défaut transversal ou défaut travers interne Dti, ainsi qu'un transducteur ultrasonore 5 effectuant un tir ultrasonore dont le faisceau se réfléchit sur le défaut travers interne Dti et revient sur le transducteur 5.

Les techniques actuelles de détection utilisent des transducteurs à ultrasons 5 positionnés à proximité d'un produit tubulaire à section constante. Ces capteurs sont couplés indirectement au tube par l'intermédiaire d'un couplant liquide, en général de l'eau. Le transducteur 5 a une direction principale sensiblement orthogonale à l'axe X du produit tubulaire complexe 3 et donc à la paroi extérieure du produit tubulaire à section constante.

De manière générale, les impulsions ultrasonores se propagent dans l'épaisseur du produit tubulaire jusqu'à la surface intérieure de la paroi dudit produit et effectuent une pluralité d'allers et retours entre la surface intérieure et la surface extérieure du produit tubulaire. En l'absence de défaut, le faisceau est réfléchi plusieurs fois dans le produit tubulaire complexe 3 et le coefficient d'absorption du métal contribue à amortir l'onde ultrasonore.

Pour effectuer un tir ultrasonore, le transducteur 5 est commandé de façon à émettre une onde ultrasonore dans le couplant, par exemple de l'eau d'indice de réfraction $n_{eau}$, avec un angle incident $\theta i$, par exemple de 17° environ par rapport à la normale de la surface d'interface eau/acier au lieu de rencontre de l'onde avec l'interface. Cette onde se propage dans le couplant jusqu'à la surface du produit tubulaire, et une onde réfractée se propage dans la matière du produit tubulaire, par exemple de l'acier d'indice de réfraction $n_{acier}$, à un angle de réfraction $\theta r$, par exemple 40° environ. Le lien entre l'angle incident $\theta i$ et l'angle de réfraction $\theta r$ est exprimé par la loi de Snell-Descartes.

$$\sin(\theta i) / V_{eau} = \sin(\theta r) / V_{acier}$$

avec $V_{eau}$ la vitesse de l'onde ultrasonore dans l'eau et $V_{acier}$ la vitesse de l'onde dans l'acier.

Cet angle de réfraction ou angle d'insonification d'environ 40° dans la matière du tube est un angle très efficace pour détecter des défauts interne ou externe situés sur la surface interne et la surface externe. En effet, un angle sur défaut $\theta d$ de 40° environ permet en général d'obtenir qu'une onde ultrasonore réfléchie par le défaut, ou écho, effectue un trajet inverse de manière à revenir sur le capteur.

On comprend que le cas représenté en figure 3 correspond au cas classique de l'inspection d'un tube à section constante et à la détection d'un défaut transversal interne Dti. Cependant, lorsque le tube à inspecter comprend des tronçons de dimensions différentes, et des tronçons sur lesquels les diamètres interne et/ou externe du tube varient, les surfaces interne et/ ou externe peuvent présenter des pentes et il est donc plus difficile d'obtenir l'angle sur défaut $\theta d$ désiré de manière à ce que l'écho du tir ultrasonore revienne sur le transducteur 5.

Ceci est illustré en figure 4, qui représente une vue en coupe longitudinale d'une portion de produit tubulaire complexe 3 à section variante. Le transducteur 5 est positionné longitudinalement selon l'axe X de manière à émettre une onde ultrasonore pénétrant le produit tubulaire complexe 3 sur un tronçon dans lequel la pente de la paroi extérieure du tube fait un angle $\alpha$ non nul par rapport à l'axe longitudinal X du produit tubulaire : c'est un tronçon dans lequel le diamètre extérieur du tube varie. La normale à la surface extérieure du tube au lieu de pénétration du faisceau ultrasonore dans la paroi du tube fait donc un angle supplémentaire $\alpha$. Il faut donc tenir compte de cet angle $\alpha$ lorsque l'on veut obtenir un faisceau ultrasonore rencontrant un défaut transversal interne Dti avec un angle sur défaut $\theta d$ de 40°.

La figure 4 représente une difficulté supplémentaire en ce que l'onde ultrasonore rencontre un défaut transversal interne Dti localisé sur un tronçon de produit tubulaire complexe 3 dans lequel la paroi interne présente une pente avec un angle $\beta$ non nul par rapport à l'axe longitudinal du tube. Dans ce cas, l'angle sur défaut $\theta d$ doit être égal à l'angle de réfraction $\theta r$ additionné des angles de pente respectifs des parois interne et externe $\alpha$ et $\beta$. Par exemple, il est alors nécessaire d'adapter l'orientation d'émission $\theta e$ de manière à obtenir que l'angle $\theta d = \theta r + \alpha + \beta$ soit environ égal à 40° afin d'obtenir que l'onde du tir ultrasonore réfléchi par le défaut transversal revienne sur le transducteur 5.

Dans le domaine du contrôle non destructif par ultrasons, on utilise souvent la terminologie suivante:

- « balayage » (ou « scan ») désigne une suite de positions relatives tube/capteur,
- « incrément » désigne le pas de balayage (inversement proportionnel à la fréquence de récurrence ou fréquence de tirs ultrasonores),
- « Ascan » désigne le graphe de la tension électrique mesurée aux bornes d'un transducteur ultrasonore, avec en abscisse le temps de vol et en ordonnée une représentation de la tension électrique, appelée également amplitude ultrasonore,
- « Bscan » désigne une image relative à une valeur donnée de l'incrément, avec, en abscisse, le balayage correspondant au tir ultrasonore, en ordonnée le temps de vol, et en chaque point l'amplitude ultrasonore convertie en dégradé de gris ou en couleurs (balayage électronique pour un capteur « phased array », balayage mécanique pour un capteur mono élément),
- « Echodynamique » désigne en général le graphe d'une courbe représentant l'amplitude maximale reçue en fonction de la position incrémentale du transducteur, par exemple le numéro de tir quand il y a un tir par position du transducteur,
- « Cscan » désigne une image avec en abscisse et en ordonnée la position équivalente dans un espace plan du point de tir de l'onde ultrasonore et représentant, convertie en dégradé de gris ou en couleurs, l'amplitude ultrasonore maximale pour ce tir relevée dans le sélecteur temporel considéré du Ascan ("amplitude de l'image"). Dans le cas d'un tube, un point de l'abscisse du Cscan correspond à une position sur la longueur du tube et un point de l'ordonnée correspond à une position sur la circonférence du tube.

    o Dans le cas d'un produit plat, un point de l'abscisse du Cscan correspond à une position sur la longueur du produit plat et un point de l'ordonnée correspond à une position sur la largeur du produit plat.

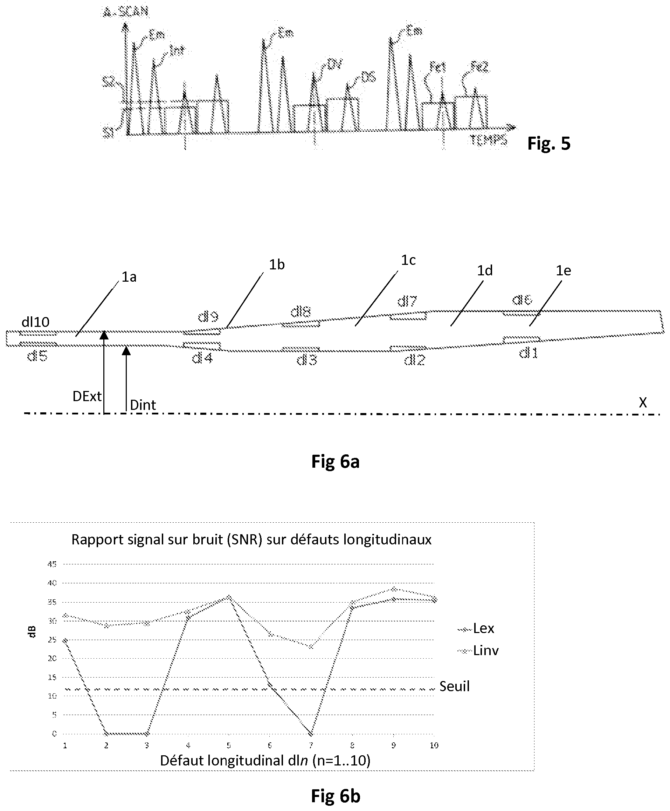

La figure 5 représente schématiquement l'allure temporelle de signaux captés en retour, dit A-scan. Un tel signal comporte les impulsions Em du faisceau émis et les impulsions des échos captés en retour. Le signal A-scan peut comporter une série d'impulsions Em, suivies d'impulsions Int d'échos d'interface entre l'eau et la surface extérieure du produit tubulaire, puis, en présence de défauts sur la surface interne du tube et/ou sur sa surface externe, des signaux d'écho relatifs à des défauts sur la surface interne Dv et des signaux d'écho relatifs à des défauts sur la surface externe Ds. En pratique, l'écho d'interface Int est prépondérant sur un écho Ds dû à un défaut sur la surface extérieure du produit tubulaire et masque cet écho Ds. C'est pourquoi l'écho Ds d'un défaut sur la surface extérieure est capté généralement sur le faisceau réfléchi par la surface intérieure du produit tubulaire.

En présence d'un défaut sur la surface intérieure du produit tubulaire, le maximum d'intensité d'un écho Dv est détecté si l'intensité de l'écho dépasse un seuil S1 dans une fenêtre temporelle Fe1.

En présence d'un défaut sur la surface extérieure du produit tubulaire, le maximum d'intensité d'un écho Ds est détecté si l'intensité de l'écho dépasse un seuil S2 dans une fenêtre temporelle Fe2.

La courbe échodynamique est donc la représentation du maximum de l'amplitude du signal reçu dans une fenêtre de contrôle au cours du temps pour chaque tir effectué. Il est possible alternativement que la courbe échodynamique soit une représentation du maximum de l'amplitude du signal reçu en fonction de la position longitudinale du tube.

La figure 5 illustre le principe d'une porte de détection dont le but est de sélectionner une partie des signaux d'écho afin d'identifier éventuellement une imperfection.

Chaque voie électronique comporte un filtre temporel FT (par exemple un échantillonneur bloqueur) relié à l'élément transducteur pour isoler des fenêtres temporelles successives, susceptibles de présenter un écho relatif à un défaut recherché (par ex. un défaut interne ou externe).

Le dispositif selon l'invention peut comprendre une électronique avec un module de filtre temporel 24 configuré pour appliquer au moins un filtre temporel $FT_i(L ; A)$ afin d'isoler dans une période correspondante $Tr_i(L ; A)$ une fenêtre temporelle $Fe_i(L ; A)$, dans laquelle des échos Dv et/ou Ds représentatifs de la présence de défauts sont susceptibles d'être présents.

La position temporelle et la largeur d'une fenêtre $Fe_i(L ; A)$ dépendent de la vitesse de propagation des ultrasons dans le métal et de la vitesse de propagation dans la hauteur de couplant, par exemple la hauteur d'eau, de la période de tir Tr, du diamètre extérieur et de l'épaisseur du tube métallique.

Selon l'invention, des positions et des largeurs des fenêtres temporelles $Fe_i(L ; A)$ peuvent être rendues dépendantes de la position longitudinale (L) d'un transducteur, ou bien de la position circonférentielle (A) d'un capteur, ou la combinaison (L ; A) de la position longitudinale et la position circonférentielle d'un transducteur. En effet, le tube variant en diamètres externe et/ou interne, le trajet d'une onde ultrasonore peut être différent en fonction de la position longitudinale (L) du transducteur 5. Les principaux paramètres variant sont alors : la distance parcourue dans le couplant, la distance parcourue dans l'acier du produit tubulaire, la distance des interfaces acier/couplant ou acier/air par rapport au transducteur 5, ainsi que les orientations des surfaces d'interface relativement par rapport au capteur. Par exemple, dans un premier tronçon du tube, le trajet peut être plus court que le trajet de cette onde dans un autre tronçon du tube dans laquelle l'épaisseur du tube est augmentée. Il est donc avantageux d'ajuster position et largeur des fenêtres temporelles $Fe_i(L)$ en fonction de la position du capteur, afin d'éviter d'utiliser des fenêtres temporelles larges et consommatrices de ressources ou afin de réduire les fausses détections. De manière analogue, dans un tube présentant une épaisseur variable le long de sa circonférence, le trajet de l'onde ultrasonore sera modifié par cette variation d'épaisseur ainsi que par la ou les pentes induites sur les surfaces extérieure et intérieure.

Selon un autre aspect, le dispositif selon l'invention peut comprendre un ou plusieurs transducteurs ultrasonores 5. Les transducteurs ultrasonores 5 comportent des éléments transducteurs aptes à émettre ou à recevoir des ultrasons.

Le dispositif selon l'invention peut comprendre pour un transducteur ultrasonore 5 une électronique de tir (6) permettant de réaliser plusieurs tirs pour une position donnée du transducteur 5. Ladite électronique de tir peut comprendre des composants communs utilisés pour chaque tir opéré, et/ou des composants exclusifs réservés à chacun des tirs effectués à une position donnée. Autrement dit, l'électronique de tir peut comprendre une voie commune aux différents tirs ou une voie dédiée à chaque tir. Dans la suite de la description, on parlera d'une voie d'acquisition $V_i$ associée au tir numéro i, quelle que soit la structure des composants électroniques utilisés. Ainsi une voie commune peut effectuer successivement les n tirs des voies $V_i$ pour i variant de 1 à *n* ou bien il peut y avoir *n* voies dédiées pour effectuer les *n* tirs. Par exemple l'électronique peut être configurée pour effectuer de un à huit tirs par position du transducteur 5. De préférence de deux à six tirs.

De préférence, pouvoir réaliser plusieurs tirs ultrasonore pour une position donnée du transducteur 5 permet d'appliquer à ces tirs ultrasonores plusieurs orientations d'émission $\theta e_i(L ; A)$ comprises entre un angle d'émission minimal de position $\theta e_{mini}(L ; A)$ et un angle d'émission maximal de position $\theta e_{maxi}(L ; A)$. Pouvoir effectuer plusieurs tirs ultrasonores pour une même position du transducteur ultrasonore (5) avec différentes orientations d'émission permet de compenser des variations non intentionnelles de l'objet à inspecter. Cela sera illustré dans les exemples.

Les voies d'acquisition $V_i$ sont donc configurées pour effectuer une série de tirs ultrasonores pour une position donnée du transducteur 5.

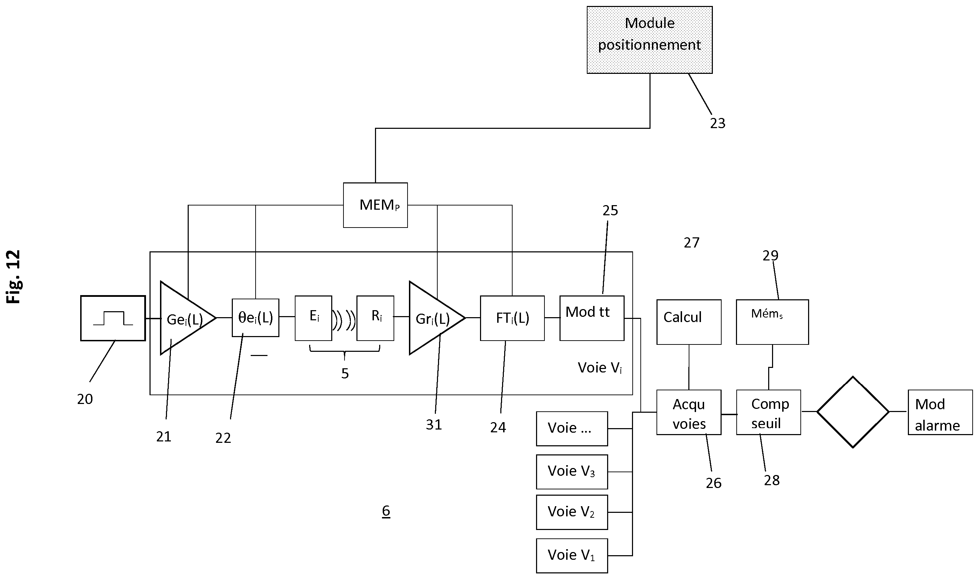

La figure 12 est un schéma de principe de l'électronique de commande et de traitement 6, associée par un circuit électronique à un transducteur ultrasonore 5 pour le contrôle non destructif dans un exemple d'installation susceptible de mettre en œuvre l'invention.

Ce schéma a pour but de mieux montrer certaines spécificités de l'invention, cette vue est en conséquence simplifiée et n'est pas spécifique à un type de capteur particulier, cependant l'homme du métier saura adapter ce schéma en fonction du type de capteur utilisé dans le dispositif.

La voie $V_i$ de la figure 12 comprend un générateur d'impulsions 20 commandant les éléments transducteurs en émission.

Le générateur d'impulsions 20 peut être relié à un étage d'amplification en émission 21 ayant pour fonction d'amplifier le signal d'impulsions en appliquant un gain en émission $Ge_i(L)$. Cet étage d'amplification 21 permet d'amplifier le signal électrique générant le tir ultrasonore.

Cet étage d'amplification 21 peut être configuré pour adapter le gain en émission $Ge_i(L)$ en fonction de la position du capteur, en particulier de la position longitudinale L du capteur 5, et pour cette raison, l'étage d'amplification 21 peut être relié à une mémoire paramétrique MEMp contenant des valeurs d'amplification en relation avec une position longitudinale (L) du capteur 5.

L'étage d'amplification en émission 21 peut être relié à un étage directionnel 22 configuré pour appliquer une orientation $θe_i(L)$ au faisceau du tir ultrasonore. De préférence, cet étage applique une loi temporelle d'excitation des transducteurs unitaires du capteur ultrasonore 5. Alternativement, en particulier lorsque le capteur 5 est du type mono-élément, cet étage commande un module d'orientation du capteur 5 par exemple sous la forme d'un plateau motorisé support de capteur.

L'étage d'amplification en émission 21 et l'étage directionnel 22 sont en relation avec les éléments transducteurs d'émission E et sont configurés pour permettre l'envoi d'un tir ultrasonore ayant une puissance correspondant au gain en émission $Ge_i(L)$ appliqué et une direction correspondant à l'orientation d'émission choisie $θe_i(L)$. L'étage directionnel 22 peut être relié à une mémoire paramétrique MEMp contenant des valeurs d'orientation en relation avec une position longitudinale L du capteur 5.

Ainsi, l'étage d'amplification en émission 21 et l'étage directionnel 22 peuvent être reliés au module de mémoire paramétrique MEMp contenant les paramètres d'orientation $θe_i(L)$ et de gain en émission $Ge_i(L)$ fonctions de la position longitudinale du capteur et du type de défaut à caractériser.

Le module de positionnement 23 est configuré pour renvoyer au module de mémoire paramétrique la position du capteur sous la forme d'une position longitudinale (L) et d'une position circonférentielle (A). Le module de positionnement 23 comprend une électronique de positionnement et au moins un capteur de position 7a (non représenté sur la figure 12). Le module de positionnement 23 indique au module de mémoire paramétrique MEMp quelles sont les valeurs des paramètres actifs dans la voie Vi pour un tir visant à détecter les défauts d'un certain type en fonction de la position du capteur 5.

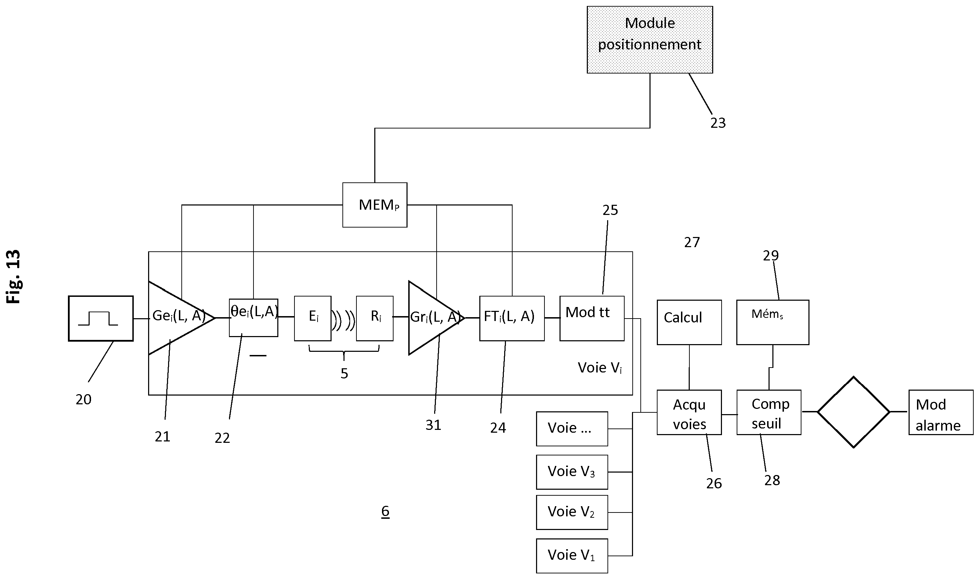

La figure 13 représente le schéma de principe de l'électronique de commande et de traitement 6 du mode de réalisation de l'invention capable d'adapter les paramètres de tir ultrasonore à la fois en fonction de la position longitudinale L et de la position circonférentielle A du capteur 5. Les étages d'amplification en émission 21 et en réception 31 peuvent être configurés pour appliquer respectivement un gain en émission $Ge_i(L ; A)$ ou en réception $Gr_i(L ; A)$ en fonction de la position longitudinale L et de la position circonférentielle A du capteur 5. De manière analogue, l'étage directionnel 22 est configuré pour appliquer une orientation $θe_i(L ; A)$ au faisceau du tir ultrasonore, et le filtre temporel $FT_i$ (L, A) est configuré pour appliquer une fenêtre temporelle en fonction de la position longitudinale et circonférentielle du capteur 5. Dans ce mode de réalisation, au moins un de ces paramètres varie en fonction de la position longitudinale L du capteur 5 et au moins un de ces paramètres varie en fonction de la position circonférentielle A du capteur 5. La mémoire paramétrique MEMp est alors adaptée pour contenir les paramètres idoines. Le module de positionnement 23 est alors configuré pour renvoyer au module de mémoire paramétrique la position longitudinale (L) et circonférentielle A du capteur.

Le capteur de position 7a peut être un codeur incrémental, un codeur à roue crémaillère, un codeur linéaire, un codeur à fil, un vélocimètre laser, une roue codeuse ou un rapport de roue codeuse.

Alternativement, le module de positionnement peut comprendre à la place d'un capteur de position (7a) un temporisateur 7b. Cette alternative est possible car les bancs de tests automatiques sont équipés de moyens de déplacement relatif du tube par rapport aux transducteurs permettant d'établir une trajectoire relative répétable et déterminée au cours du temps. Cependant, le temporisateur 7b peut être moins précis que le capteur de position 7a.

Comme expliqué précédemment, dans une première variante, la position du capteur 5 correspond à la position longitudinale (L) du capteur 5. Dans une deuxième variante, la position du capteur 5 correspond à la position longitudinale (L) et la position circonférentielle (A) du capteur 5. Le module de positionnement 23 est alors configuré pour renvoyer au module de mémoire paramétrique la position longitudinale (L) et la position circonférentielle (A) du capteur. Dans une troisième variante, la position du capteur 5 correspond à la position circonférentielle A du capteur 5. Le module de positionnement 23 est alors configuré pour renvoyer au module de mémoire paramétrique la position circonférentielle (A) du capteur.

Le transducteur en émission $E_i$ du capteur 5 peut émettre un faisceau d'ondes ultrasonores dirigé.

La voie $V_i$ comprend un transducteur en réception $R_i$, qui peut être le même transducteur que le transducteur en émission $E_i$ ou un autre transducteur. Un transducteur en réception $R_i$ peut recevoir le ou les éventuels échos des signaux émis, et les transformer en un signal électrique correspondant. Le transducteur en réception $R_i$ peut être relié à un étage d'amplification en réception 31, dont la fonction est d'amplifier le signal électrique reçu par le transducteur en réception $R_i$.

L'étage d'amplification en réception 31 peut être configuré pour appliquer au signal reçu une amplification avec un gain en réception de la voie $V_i$ noté $Gr_i(L)$, qui est choisi en fonction de la position longitudinale (L) et/ou de la position circonférentielle (A) du transducteur 5 et de la nature de l'imperfection recherchée. Pouvoir moduler le gain de cet étage d'amplification en réception permet d'améliorer la détection de défauts, de manière analogue à l'amplification configurable en émission. Lorsque cet étage est configuré avec une amplification analogique, cela a pour avantage d'amplifier le signal de réception en limitant dans une certaine mesure l'amplification du bruit en réception. Lorsque cet étage est configuré avec une amplification numérique, ceci permet d'amplifier le signal en réception mais a pour inconvénient de plus amplifier le bruit qu'avec une amplification analogique.

Les transducteurs en réception $R_i$ peuvent également être reliés à un module de filtre temporel 24 configuré pour appliquer un ou plusieurs filtres temporels $FT_i(L)$. Chaque filtre temporel $FT_i(L)$ isole une fenêtre temporelle dans laquelle l'écho du tir ultrasonore est susceptible d'être présent. La fonction d'un filtre temporel $FT_i(L)$ est donc de sélectionner la partie du signal en réception correspondant à la fenêtre temporelle dans laquelle un écho Dv, Ds d'un tir ultrasonore dévié par un défaut type est susceptible de revenir sur les transducteurs en réception R et de pouvoir traiter spécifiquement le signal sur une période de temps choisie. Cela permet de diminuer les ressources en mémoire et en capacité de calcul de l'électronique, et cela permet aussi d'éviter de mesurer un écho qui ne correspondrait pas à l'écho attendu d'un tir ultrasonique effectué dans le but de détecter un type de défaut, par exemple un écho secondaire.

Le module de filtre temporel 24 peut être relié au module de mémoire paramétrique MEMp contenant les paramètres de position des filtres temporels en fonction de la position longitudinale du capteur (L) et du type de défaut à caractériser, et éventuellement dans une variante à la fois de la position circonférentielle (A) du capteur et de sa position longitudinale (L).

La mémoire MEMp peut être configurée pour contenir des données relatives aux positions et largeurs des fenêtres $Fe_i(L)$ en fonction de la position (L) du capteur. En correspondance, le module de filtre temporel 24 comprend des filtres temporels $FT_i(L)$ configurés pour modifier les positions et largeurs des fenêtres temporelles $Fe_i(L)$ pour chaque voie $V_i$ d'acquisition.

Dans une première variante, les portes de détection ont la même durée ou longueur pour un même type de défaut. La grandeur représentative est alors le moment d'ouverture de la porte de détection, ou sa position de début, qui est en général implémenté sous la forme d'un retard par rapport au tir effectué.

Dans une seconde variante, la position de début et la position de fin de la porte de détection sont modifiées, pouvant ainsi générer des portes de détection de longueur variable. Dans cette variante, deux grandeurs représentatives sont donc utilisées pour configurer les valeurs $FT_i(L)$.

Le module de filtre temporel 24 est suivi d'un module de traitement 25, comprenant un détecteur de seuil qui repère le maximum en intensité du signal reçu Ds, Dv. Ce module de traitement 25 est relié à une mémoire d'acquisition des voies 26 pour enregistrer l'intensité maximale de l'écho de chaque voie $V_i$.

Lorsque les voies Vi ont leur propre électronique, une mémoire d'acquisition des voies 26 est reliée de la même façon aux voies analogues du dispositif, par exemple la mémoire 26 est reliée à chacune des voies $V_1$ $V_2$ $V_3$,...$V_8$.

Lorsqu'il y a une seule électronique pour plusieurs tirs, le module 26 est configuré pour stocker le l'intensité maximale du signal reçu de chaque voie $V_i$ associée à un tir ultrasonore i.

La mémoire d'acquisition des voies 26 peut être reliée à un module de calcul 27 configuré pour générer des courbes échodynamiques. Le module de calcul 27 peut également générer des A-scan, des B-scan à partir du signal reçu de plus grande intensité parmi les i tirs ultrasonores effectués à une position donnée pour un type de défaut choisi, et ce module de calcul 27 peut également générer un C-scan du produit tubulaire inspecté.

La mémoire d'acquisition des voies 26 peut être reliée à un comparateur de seuil 28. Le comparateur de seuil 28 compare le maximum d'intensité du signal d'écho reçu et le niveau seuil de déclenchement d'alerte stocké dans une mémoire de seuil d'alerte dédiée 29. Ce comparateur peut déclencher le fonctionnement d'un module d'alerte à l'opérateur 30.

Dans un autre mode de réalisation de l'invention, l'électronique 6 est configurée pour définir au moins un paramètre du tir ultrasonore en fonction de la position longitudinale (L) et de la position circonférentielle (A) du moyen d'émission ultrasonore de manière à capter des défauts dans la paroi du tube, ledit au moins un paramètre étant choisi parmi l'orientation d'émission du tir $\theta e_i(L ; A)$, le gain $G(L ; A)$ ou la position du filtre temporel $FT_i(L ; A)$.

Le demandeur a réalisé plusieurs séries d'essais sur des produits tubulaires échantillons munis de défauts réalisés expressément afin de déterminer la qualité de détection de ces défauts.

Dans un premier exemple, le tube échantillon (1) d'axe (X) de la figure 6a présente plusieurs tronçons 1a à 1e et aménagées telles que :

- Le tronçon 1a comporte des diamètres externe (Dext) et interne (Dint) constants.
- Le tronçon 1b comporte des diamètres externe (Dext) et interne (Dint) non constant, le diamètre externe (Dext) s'accroissant du tronçon 1a vers le tronçon 1c et le diamètre interne étant décroissant dans la même direction.
- Le tronçon 1c comporte un diamètre externe s'accroissant du tronçon 1b vers le tronçon 1d et le diamètre interne est constant
- Le tronçon 1d comporte un diamètre externe et un diamètre interne s'accroissant tous deux du tronçon 1c vers le tronçon 1e

- Le tronçon 1e comporte un diamètre externe constant et un diamètre interne s'accroissant depuis le tronçon 1d

Des entailles longitudinales $dl_i$ (identifiées $dl_1$ à $dl_{10}$) de longueur 25 mm ont été réalisées sur le tube échantillon de la figure 6a. La profondeur des entailles est constante et la paroi de fond des entailles est donc sensiblement parallèle à la surface dans laquelle sont produites ces entailles, ce qui n'est pas représenté dans la figure 6a.

Le tube de la figure 6a a été soumis à une inspection par un dispositif automatique de détection de défaut de l'état de l'art puis avec un dispositif selon l'invention, afin de mesurer les intensités des échos de retour de chaque entaille longitudinale $dl_i$. Dans ce dispositif selon l'invention, on fait seulement varier l'angle d'émission $\theta e(L)$ sur une voie d'acquisition.

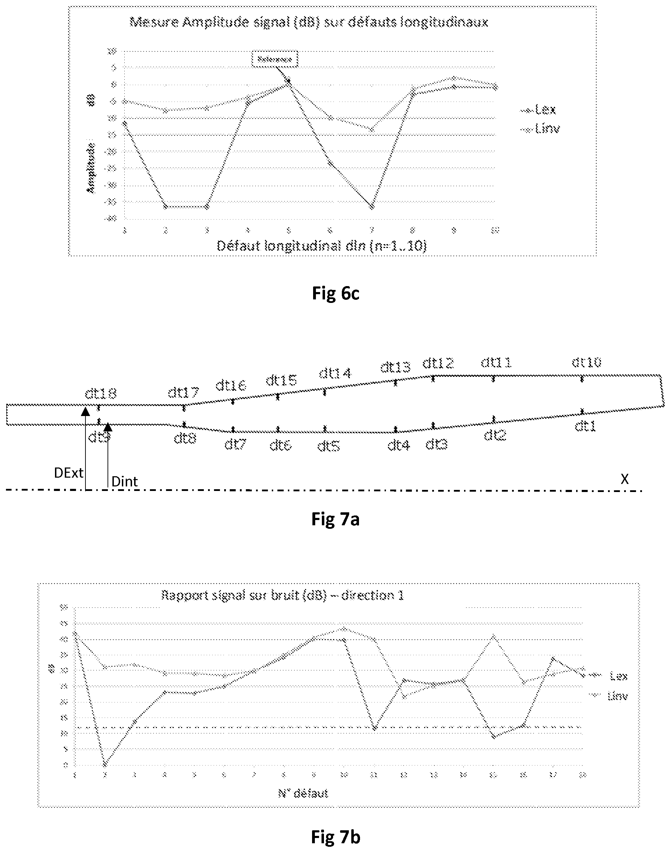

Le résultat de ce test est montré en figures 6b et 6c, qui représentent des graphiques avec en abscisse le numéro de l'entaille $dl_i$ correspondant aux entailles de la figure 6a et en ordonnée le rapport signal sur bruit pour la figure 6b et la perte d'amplitude en dB par rapport à l'entaille de référence n°5 sur la figure 6c.

Le graphique 6b représente trois courbes :

- la courbe seuil délimitant un rapport signal sur bruit minimal d'une entaille choisi à 12 dB,
- la courbe des rapports signal sur bruit relevés avec un dispositif de l'état de l'art (Lex),
- la courbe des rapports signal sur bruit relevés avec un dispositif selon l'invention (Linv).

Le graphique 6c représente deux courbes :

- la courbe de perte d'amplitude en dB par rapport à l'entaille de référence n°5 relevée avec un dispositif de l'état de l'art (Lex),
- la courbe de perte d'amplitude en dB par rapport à l'entaille de référence n°5 relevée avec un dispositif selon l'invention (Linv).

On voit que les entailles 5 et 10 sont relevées au même niveau par le dispositif de l'état de l'art et par un dispositif selon l'invention, ce qui est normal, les entailles 5 et 10 se situent dans un tronçon du tube à section constante et la différence de constitution entre les deux dispositifs est inopérante dans ce tronçon.

Par contre, les entailles 2, 3, 6, 7 renvoient des échos très faibles dans le dispositif de l'état de l'art, avec des niveaux inférieurs au seuil de détectabilité, alors que le dispositif selon l'invention permet d'obtenir des échos de niveau élevé, supérieurs à 23 dB dans tous les cas.

On en déduit donc que le dispositif de l'état de l'art ne détecte pas les entailles 2, 3, 7 voire 6 en mode d'inspection en production, alors que le dispositif selon l'invention permet de détecter ces entailles.

La figure 6c montre la perte d'amplitude entre une entaille de référence, ici dl5, et l'intensité des échos sur les autres entailles. Le niveau du signal est fixé conventionnellement à 0dB sur l'entaille de référence n°5 (ou dl5). La plus petite intensité reçue est inférieure de 13dB avec le dispositif selon l'invention, alors que l'écart atteint 35 dB sur 3 défauts avec le dispositif de l'état de l'art.

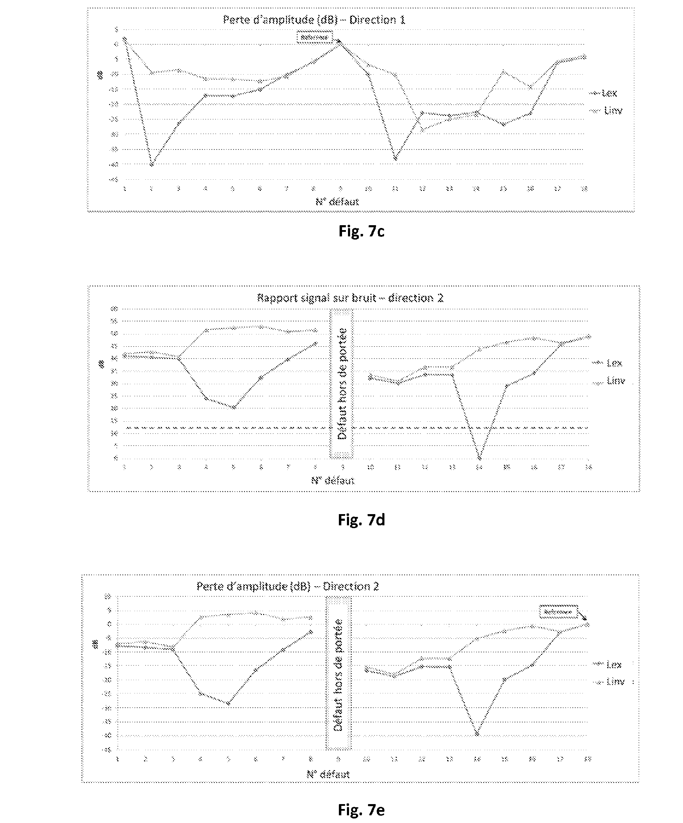

Le tube échantillon de la figure 7a est muni d'entailles transversales $dt_i$ ($dt_1$ à $dt_{18}$) sur une série de tronçons variés semblables à l'exemple précédemment décrit. On rappelle que les défauts transversaux peuvent être détectés à l'aide de tirs présentant une orientation choisie dans un plan longitudinal, telle que présentée en figures 3 et 4. Les défauts transversaux peuvent être détectés dans les deux sens de la direction longitudinale. Les figures 7b, 7c, 7d, 7e montrent les valeurs du rapport signal sur bruit et des amplitudes des échos mesurés dans un premier sens d'inspection puis dans le deuxième sens d'inspection, pour un dispositif de l'état de l'art et le dispositif selon l'invention utilisé dans l'essai des figures 6a-c, c'est-à-dire en faisant seulement varier l'angle d'émission $\theta e(L)$ sur une voie d'acquisition.

On remarque que pour l'inspection dans un premier sens des figures 7b, 7c, il y a une nette amélioration de l'amplitude de retour mesurée sur certains défauts transversaux interne ou externe. Plus particulièrement, avec le dispositif de l'état de l'art, les défauts numérotés $Dt_2$, $Dt_3$, $Dt_{11}$, $Dt_{15}$ et $Dt_{16}$ sont détectables de manière limite ou peuvent ne pas être détectés puisque le rapport signal sur bruit de leurs échos reçus est égal ou inférieur à 12dB.

Avec le dispositif selon l'invention, tous ces défauts sont détectés. De plus, le niveau du rapport signal sur bruit des échos reçus est élevé, supérieur à 20 dB, ce qui permet d'avoir un écho correctement différencié du bruit de fond. Le dispositif selon l'invention permet également d'avoir une homogénéité améliorée entre les différentes intensités relevées des échos sur les défauts transversaux internes, avec une différence de moins de 12 dB entre le défaut $Dt_1$ et le défaut $Dt_6$. Cette différence est de moins de 25dB sur les défauts externes $Dt_{10}$ et $Dt_{12}$.

Les figures 7b-e permettent de constater qu'un dispositif selon l'invention qui fait varier l'angle d'orientation d'un tir permet d'obtenir de meilleurs résultats que le dispositif de l'état de l'art, en particulier sur le tronçon de tube dont la section a un diamètre extérieur variant longitudinalement. Dans le sens de détection de la figure 2, l'homogénéité des intensités relevées d'échos est améliorée aussi bien pour les défauts transversaux internes qu'externes, avec des écarts de moins de 12dB sur le rapport signal sur bruit aussi bien sur les défauts transversaux internes ou externes.

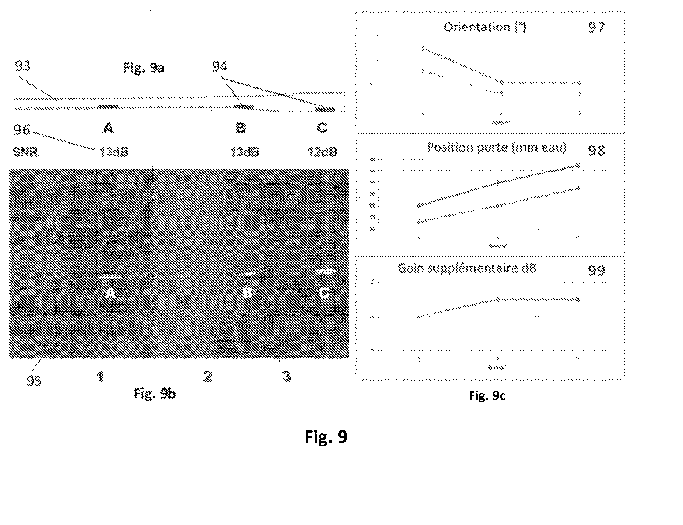

On verra par la suite avec les exemples des figures 9 à 11 qu'un dispositif selon l'invention peut également atteindre un très bon niveau d'homogénéité en faisant varier à la fois l'orientation d'émission $\theta e_i(L)$ et le gain $G_i(L)$.

La figure 7c montre qu'il y a encore une perte d'amplitude d'échos sur certains défauts qui peut être considérée comme importante, et spécialement pour des défauts externes dont on rappelle qu'ils sont détectés au travers de l'écho d'un faisceau ultrasonore se réfléchissant sur la surface interne du produit tubulaire ; le trajet est donc particulièrement long et l'atténuation de l'écho de retour est plus sensible aux variations de diamètres interne et externe. L'atténuation peut encore être de l'ordre de 25 dB sur les défauts 12 à 14. Cette réponse peut donc être encore améliorée, ce qui sera exposé ci-après dans un mode de réalisation dans lequel l'électronique 6 est arrangée pour faire varier au moins deux paramètres du tir ultrasonore en fonction de la position longitudinale (L) du moyen d'émission ultrasonore choisis parmi l'orientation d'émission du tir $\theta e_i(L)$, le gain $G_i(L)$ ou la position du filtre temporel $FT_i(L)$.

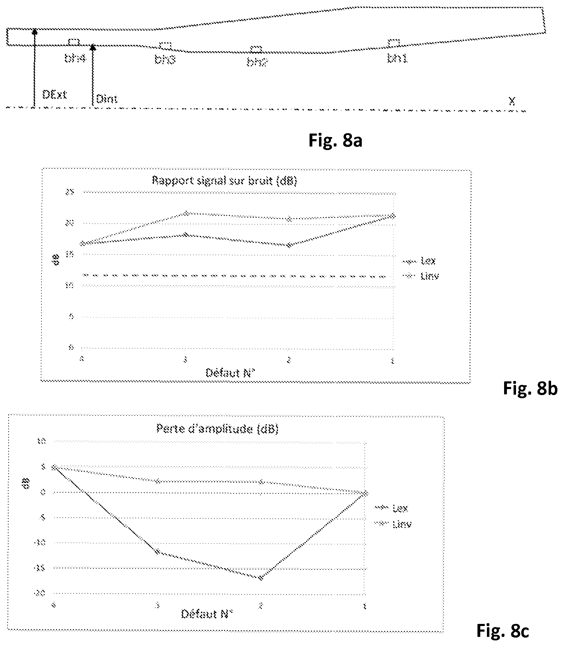

Les figures 8a et 8b-c montrent respectivement un tube échantillon dans lequel ont été réalisés 4 trous à fond plat $Tfp_i$ utilisés comme défauts étalon en ce qui concerne la détection de défauts dans la paroi appelés « dédoublures », et les courbes comparatives d'un dispositif de l'état de l'art Lex et d'un dispositif selon l'invention Linv, à la fois par une mesure du rapport signal sur bruit (fig. 8b) et par une mesure de l'amplitude du signal en dB (fig. 8c). L'électronique du dispositif est agencée pour faire varier le paramètre de l'orientation du tir $\theta e_i(L)$ et la position du filtre temporel $FT_i(L)$ le long de l'axe longitudinal, sans faire varier le gain, de manière analogue aux essais réalisés et exposés dans le cadre des figures 6 et 7.

Les trous à fond plat $Tfp_i$ ont un diamètre de 6 mm et une profondeur égale à la moitié de l'épaisseur locale de la pièce. Il a été décidé de réaliser le fond parallèle à l'axe du tube, et non pas des fonds parallèles à la paroi interne du tube.

La figure 8b montre une amélioration d'environ 5dB du rapport signal sur bruit sur un tronçon dans lequel le diamètre externe varie longitudinalement. La figure 8c montre une amélioration de plus de 15dB du niveau d'amplitude du signal de retour sur ce même tronçon. La seule variation du diamètre interne sur un tronçon ne semble pas avoir d'influence sur la qualité de la mesure en ce qui concerne la détection de trous à fond plat.

Ces résultats montrent qu'un dispositif selon l'invention permet d'améliorer aussi la détectabilité des défauts de type dédoublures, puisque les intensités des échos de retour est plus importante pour les trous à fond plat $Tfp_3$ et $Tfp_2$.

Il n'y a pas de différence constatée sur les trous à fond plat $Tfp_1$ et $Tfp_4$ car ces trous sont réalisés sur des tronçons de tube à diamètre extérieur constant et que la pente de la paroi interne n'a pas d'influence sur la mesure, le tir ultrasonore étant dirigé sur le fond plat. L'amélioration de la situation vient du choix de l'orientation de l'orientation d'émission $\theta e(L)$ et de la position des filtres temporels $FT_i(L)$ de détection en fonction de la position longitudinale du capteur.

D'autres tubes échantillons avec différentes épaisseurs et configurations de variation ont été testés et présentent des résultats similaires, c'est-à-dire montrant une grande amélioration de la détectabilité de défauts de tous types avec un dispositif selon l'invention par rapport à un dispositif de l'état de l'art.

La figure 9 est composée des figures 9a, 9b, 9c et a pour but de montrer un ensemble complet de test avec une représentation en figure 9a d'un profil de produit tubulaire à diamètres externes et internes variants, muni de trois entailles longitudinales internes désignées par A, B, C.

La figure 9b représente un C-scan 95 obtenu après balayage de l'échantillon tubulaire 93 par un dispositif selon un mode de réalisation de l'invention, dans lequel les trois paramètres de tir ultrasonore Vi varient en fonction de la position longitudinale du capteur ultrasonore 5.

Le C-scan 95 de la figure 9b fait apparaître trois zones correspondant à trois jeux de paramètres d'inspection. Ces jeux de paramètres sont montrés par la figure 9c. Le graphique 97 montre les valeurs minimales et maximales de l'angle d'émission $\theta e_i(L)$ pour chaque zone, et il faut comprendre que toutes les valeurs par incrément de 3° entre la valeur minimale et la valeur maximale sont inspectées. Ainsi, en zone 1, l'angle d'émission $\theta e_i(L)$ varie entre 0° et 6°. Trois tirs pour chaque position d'inspection sont effectués au travers de trois voies électroniques avec $\theta e_1([1])=0°$ ; $\theta e_2([1])=3°$ ; $\theta e_3([1])=6°$. La notation [1] remplace toutes les positions axiales et circonférentielles que le capteur 5 atteint dans la zone 1 pour les besoins de l'inspection. En zone 2, deux tirs sont effectués par position à -6° et à -3°. Ces valeurs sont les mêmes en zone 3. S'agissant de la détection d'entailles longitudinales, l'homme du métier comprend que l'orientation du faisceau ultrasonore émis dans le cas de l'inspection de défauts longitudinaux comprend une composante transversale contenue sensiblement dans une section droite du tube, et obtenue par une orientation mécanique du transducteur ultrasonore 5, avec un « angle mécanique » $\theta m$ choisi à 17° environ par rapport à une normale à l'axe du produit tubulaire passant par le point de rencontre entre le faisceau émis et la surface extérieure du produit tubulaire, ainsi qu'une composante longitudinale correspondant à l'angle d'émission $\theta e(L)$ obtenu dans le mode de réalisation de la figure 9 par un pilotage électronique d'un transducteur à réseau de phase. Dans le cas de cette inspection, l'angle mécanique $\theta m$ est fixe tandis que l'angle d'émission $\theta e(L)$ varie en fonction de la position longitudinale L du transducteur 5.

Le graphique 98 montre les valeurs d'ouverture et de fermeture de la fenêtre temporelle $FT_i(L)$ et donc le positionnement de la porte de détection pour chaque zone, donnée en mm dans l'eau. Une porte de la zone 3 est retardée par rapport à une porte dans la zone 2 qui est elle-même plus tard qu'une porte dans la zone 1. Ceci permet de prendre en compte un trajet de l'onde ultrasonore plus long dans la zone 3 où l'entaille longitudinale C est la plus éloignée du transducteur 5 en comparaison de la zone 1 où l'entaille longitudinale A est plus proche du transducteur 5.

Le gain $G_i(L)$ et sa variation par rapport à la position longitudinale du transducteur 5 est représenté par le graphique 99. Le gain est augmenté de 1 dB en zones 2 et 3 par rapport au gain utilisé dans la zone 1. Dans cet exemple, c'est le gain en réception $Gr_i(L)$ qui est modifié en fonction de la position longitudinale du transducteur 5.

Le C-scan 95 obtenu montre que toutes les entailles longitudinales sont détectées de manière satisfaisante, et qu'il n'y a aucun écho parasite faisant apparaître un défaut « fantôme ». De plus, le rapport signal sur bruit 96 est très homogène sur les trois défauts, à 13 ou 12 dB.

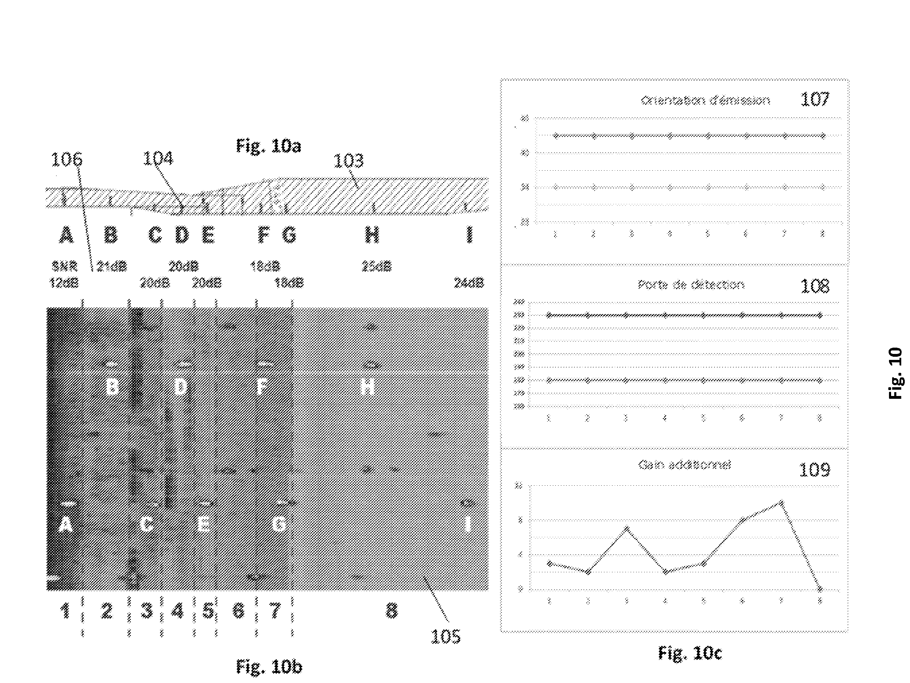

La figure 10 est composée des figures 10a 10b 10c et montre un exemple de résultat obtenu par la mise en œuvre de l'invention sur la détection de défauts travers internes en faisant varier uniquement le gain du faisceau ultrasonore. Ici on inspecte la pièce dans la direction 1, soit un balayage du défaut A vers le défaut I.

La figure 10a montre une section partielle d'un profil de produit tubulaire 103 muni d'entailles transversales 104 réparties longitudinalement sur la surface intérieure du produit tubulaire 103 et numérotées par les lettres A à I. Chaque entaille a une longueur de 10 mm.

La figure 10b montre le C-scan 105 résultant de l'inspection du produit tubulaire 103 par un dispositif selon l'invention. Ce C-scan permet d'identifier clairement chaque entaille A à I. Le dispositif selon l'invention a permis d'identifier toutes ces entailles. On a fait apparaître sur le C-scan 105 de la figure 10b des zones numérotées 1 à 8 qui correspondent à un découpage virtuel du produit tubulaire selon l'axe longitudinal. Ces zones correspondent à des jeux de paramètres comprenant l'orientation d'émission $\theta_j e(L)$, le positionnement de portes de détection $FT_i(L)$ et le gain $G_i(L)$. En association avec le C-scan 105, on fait apparaître le rapport signal sur bruit (SNR) moyen 106 mesuré sur chaque défaut détecté.

La figure 10c montre les valeurs des paramètres pour chaque zone 1 à 8. Dans le cadre de l'exemple de la figure 10, l'orientation d'émission est choisie avec des valeurs représentées dans le graphique 107, les valeurs minimales et maximales sont les mêmes pour chaque zone, à savoir respectivement entre 34° et 43°. Le dispositif est configuré pour faire des tirs tous les 3° entre les bornes minimale et maximale. En conséquence, pour chaque position de tir, le dispositif a effectué 4 tirs au total avec les angles suivants : 34°, 37°, 40°, 43°. Les orientations des tirs sont donc invariantes quel que soit le positionnement longitudinal (L) du capteur 5 utilisé.

La figure 10c montre également le positionnement des portes de détection en 108. Les valeurs de position de ces portes sont données en millimètres dans l'eau qui est le médium de couplage choisi pour l'expérience. Ces valeurs sont les mêmes dans toutes les zones 1 à 8. Les positions des portes de détection sont donc invariantes quel que soit le positionnement longitudinal (L) du capteur 5 utilisé.

La figure 10c montre par le graphique 109, pour chaque zone 1 à 8, les valeurs de gain additionnel en dB au gain de base pour former le gain $G_i(L)$. Le gain additionnel est par exemple de 3dB en zone 1, de 7 dB en zone 3, de 10 dB en zone 7. Le gain $G_i(L)$ est le même pour chacun des 4 tirs d'orientation différente effectués à une position longitudinale donnée (L). Ainsi, en zone 1, pour une position donnée, un premier tir est effectué à un angle d'émission dans l'acier de 34° et avec un gain additionnel de 3 dB, un deuxième tir est effectué à 37° avec un gain additionnel de 3 dB, un troisième à 40° et 3dB, et un quatrième tir à 43° et 4 dB.

Le C-scan 105 de la figure 10b montre que la seule variation de gain $G_i(L)$ permet de détecter toutes les imperfections, et permet donc d'obtenir un premier résultat satisfaisant. Cependant, le C-scan obtenu présente un rapport signal sur bruit non homogène qui varie entre 18 et 25dB selon la zone. Le C-scan montre d'autres défauts, qui correspondent à des entailles pratiquées sur le même composant tubulaire pour d'autres expériences, pour des raisons d'économie.

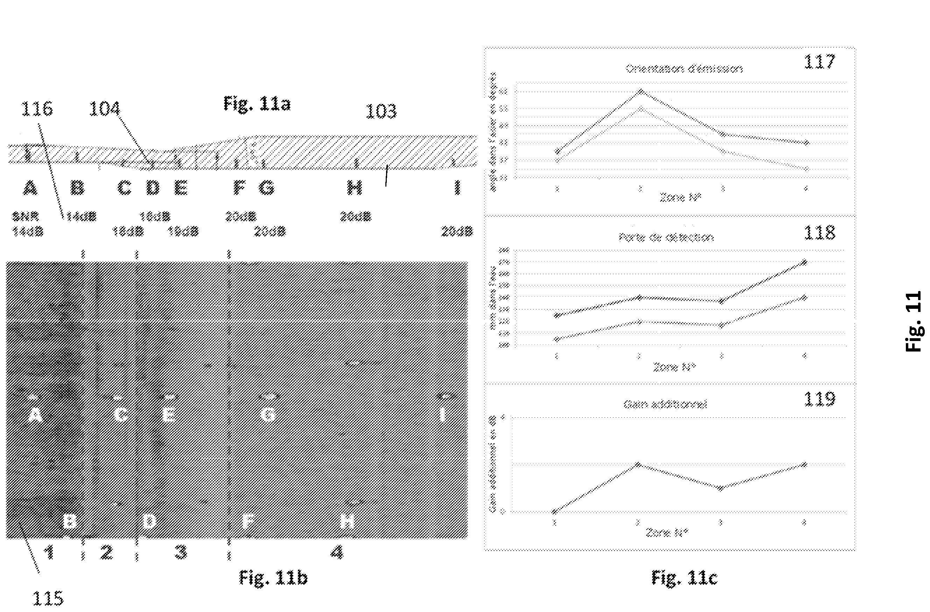

La figure 11 montre un essai mené dans un deuxième temps, avec le même produit tubulaire 104 muni des entailles A à I, l'inspection étant cette fois réalisée dans la direction 2, soit avec un balayage du défaut I vers le défaut A, avec un dispositif selon l'invention dans lequel le jeu de paramètres est différent de celui utilisé dans le cadre des figures 10a-c, en ce qu'il utilise une variation des trois paramètres le long de l'axe longitudinal du produit tubulaire 103. Le nouveau jeu de paramètres est représenté en figure 11c et les résultats obtenus en correspondance sont représentés en figure 11b.

Le jeu de paramètres de la figure 11c est découpé selon l'axe longitudinal du produit tubulaire en 4 zones numérotées 1 à 4, soit deux fois moins de zones que précédemment en figure 10a-c.

La figure 11c montre dans le graphique 119 l'évolution du gain $G_i(L)$ en représentant le gain additionnel appliqué dans chaque zone, en dB, par rapport à une valeur de base du gain, qui est choisie en tant que gain de référence pour l'inspection. Le gain additionnel est ainsi de zéro dans la zone n°1, de 2 dB en zone n°2, de 1 dB en zone n°3 et de 2 dB en zone n°4. Dans cet exemple, ces variations de gain permettent de compenser un trajet plus long des ondes ultrasonores, ou par exemple dans la zone 2 de la figure 11a-c, pour compenser une plus faible réponse de l'entaille transversale C qui est penchée et qui de ce fait pourrait réfléchir plus faiblement le signal dans la direction de tir.

La figure 11c montre en 118 que le positionnement des portes de détection $FT_i(L)$ est différent selon chaque zone. Ce positionnement est par exemple entre 220 mm et 240 mm dans l'eau dans la zone 2 et est entre 240 mm et 270 mm dans la zone 4. Une porte de détection en zone 4 est donc non seulement positionnée plus tard qu'une porte en zone 2, mais est également plus large qu'une porte en zone 2.

La figure 11c montre en 117 les orientations d'émission des tirs pour une position donnée, en représentant la valeur maximale et la valeur minimale de l'angle d'émission dans l'acier en degrés par zone de la zone 1 à la zone 4, et en réalisant des tirs à ces valeurs extrêmes et aussi par incrément de 3° entre les deux valeurs extrêmes, est différente selon les zones. Le nombre de tirs par zone varie également. En effet, en zone n°1, il y a deux tirs par position aux angles de 37° et 40° ; en zone n°2, 3 tirs sont effectués par position avec les angles de 55°, 58°, 61 ; en zone n°3, il y a également 3 tirs à 40°, 43°, 46° ; et enfin en zone 4, 4 tirs sont effectués par position aux angles de 34°, 37°, 40°, 43°. L'angle d'émission est plus important en zone 2 du fait de la pente de la paroi intérieure du produit tubulaire dans cette zone. Le nombre de tirs est plus important en zone 4 car il y a différentes typologies de variation de diamètres dans cette zone, même si ces variations sont de plus faible ampleur qu'en zone 2.

Le C-scan 115 montre en figure 11b que toutes les entailles sont bien détectées, malgré un découpage en seulement 4 zones de l'élément tubulaire. Il n'apparaît donc pas nécessaire de créer autant de zones définissant des jeux de paramètres qu'il y a de tronçons de typologies différentes le long du produit tubulaire. L'intensité de retour sur les défauts est homogène (l'intensité est représentée par la couleur ou le niveau de gris dans le C-scan). Aussi, le niveau de bruit est presque divisé par deux sur l'entaille G en figure 11b en comparaison avec le niveau de bruit sur l'entaille G en figure 10b. Avoir au moins deux paramètres ou trois paramètres variant selon la position longitudinale du capteur, choisis parmi le gain $G_i(L)$, l'orientation d'émission $\theta e_i(L)$, le filtre temporel $FT_i(L)$ permet d'améliorer la qualité de la détection de défauts dans des produits tubulaires à section variable.

Par ailleurs, le test des figures 11a-c permet d'effectuer l'inspection avec 20% de tirs en moins que dans le cas des figure 10a-c tout en conservant une bonne détectabilité des défauts avec un rapport signal sur bruit satisfaisant et une bonne homogénéité des réponses.

Il est généralement nécessaire d'étalonner les dispositifs de contrôle non destructifs afin de fixer une valeur-seuil de l'intensité de retour d'un écho pour un type de défaut donné et un type de produit tubulaire donné. C'est-à-dire qu'il y a en général une calibration pour les défauts de type entaille longitudinale, une calibration pour les défauts de type entaille transversale, une calibration pour les défauts de type trou à fond plat, et ceci pour chaque type de produit tubulaire. Par exemple, un premier type peut être un tube de diamètre externe de 250mm et de diamètre interne 200mm, alors qu'un second type peut être un tube de 315mm de diamètre externe et 275mm de diamètre interne.

On utilise classiquement en tant que défauts de référence, ou défauts-étalons, des entailles de position (profondeur et orientation) et de dimensions connues, le plus souvent normalisées, ménagées dans un tube-échantillon.

Pour limiter le nombre de tirs et limiter la capacité de calcul nécessaire pour le dispositif selon l'invention, il est ainsi préférable d'étalonner ledit dispositif de façon à déterminer les valeurs de paramètres choisis parmi l'orientation d'émission $\theta e(L)$, du gain $G(L)$ et/ou de la position d'un filtre temporel $FT_i(L)$ pour différentes positions longitudinales du ou des capteurs ultrasonores.

De préférence, on choisira de positionner des défauts étalons à différentes positions longitudinales de manière à obtenir des valeurs desdits paramètres pour chaque typologie de tronçon du produit tubulaire complexe 3 à section variable à inspecter. Autrement dit, un étalonnage peut être réalisé pour les différents tronçons du produit tubulaire complexe 3 à section variable. L'étalonnage est effectué sur un tube échantillon analogue aux produits tubulaires complexes à inspecter. Ainsi, le tube-échantillon présente des valeurs de diamètre et d'épaisseur analogues à un modèle de produit tubulaire à inspecter, c'est-à-dire des tronçons identiques, les mêmes formes complexes. Le tube-échantillon doit en outre être réalisé en un matériau identique à celui du modèle, c'est-à-dire la même nuance d'acier et présente également les mêmes traitements thermiques, les mêmes états de surface.

Le processus d'étalonnage permet alors à partir d'un tube échantillon représentatif d'un produit tubulaire donné, et pour un type de défaut, d'associer à chaque position du capteur ultrasonore 5 les paramètres que sont l'orientation d'émission $\theta e(L)$, du gain $G(L)$ et/ou de la position d'un filtre temporel $FT_i(L)$. Ces paramètres peuvent alors être stockés dans un tableau tel que celui représenté ci-dessous pour un paramétrage en fonction de la position longitudinale (L) du capteur.

| Position longitudinale | Orientation $\theta_j e(L)$ | Gain G(L) | Portes détection FT(L) |
|---|---|---|---|
| L 1 | $\theta e(L1)$ | G(L1) | FT(L1) |
| L 2 | $\theta e(L2)$ | G(L2) | FT(L2) |
| L 3 | $\theta e(L3)$ | G(L3) | FT(L3) |
| ... | ... | ... | ... |
| L X | $\theta e(LX)$ | G(LX) | FT(LX) |
| ... | ... | ... | ... |

On fait maintenant référence à la figure 12.

Un produit tubulaire complexe 3 à section variable obtenu par les procédés industriels peut présenter des variations dimensionnelles par rapport aux valeurs nominales souhaitées. Ainsi, du point de vue d'un capteur, des parois du produit tubulaire à inspecter peuvent présenter des pentes réelles de parois ou des positionnements réels des pentes des parois différents des pentes et positionnements nominaux. En conséquence, on rappelle qu'avoir une valeur unique pour des paramètres tels que l'orientation d'émission $\theta e_i(L)$, le gain $G_i(L)$ et/ou la position d'un filtre temporel $FT_i(L)$ ne permet pas toujours d'avoir la meilleure réponse à un tir ultrasonore pour la détection d'un défaut donné.

Ainsi, selon un mode de réalisation de l'invention, le dispositif comprend une électronique de commande et de traitement 6 capable de réaliser une série de tirs ultrasonores au travers de voies $V_i$ pour une position longitudinale (L) en faisant varier pour chaque voie $V_i$ au moins un des paramètres choisis parmi l'orientation d'émission $\theta_j e(L)$, du gain $G_i(L)$ et/ou de la position d'un filtre temporel $FT_i(L)$ à proximité de valeurs nominales des paramètres que sont l'orientation d'émission $\theta e(L)$, du gain $G(L)$ et/ou de la position d'un filtre temporel $FT(L)$.

Par exemple, pour une inspection d'un défaut transversal $Dt_{ex}$ à une position longitudinale donnée $P_{ex}$, l'orientation d'émission correspondante $\theta e(P_{ex})$ peut avoir été déterminée à 20° dans l'eau dans le plan longitudinal. 8 tirs ultrasonores peuvent être effectués avec orientations d'émission $\theta e$ de 16° à 23° dans l'eau par incrément de 1°. L'électronique de commande et de traitement 6 est donc aménagée pour pouvoir effectuer n séquences de tirs, par exemple de 1 à 10 séquences de tirs.

Chaque amplitude maximum d'un écho correspondant est stocké dans des mémoires respectives de voie MemVi, ces valeurs sont comparées par un module de comparaison de voies « Comp voies » qui peut retenir le maximum d'amplitude parmi les amplitudes relevées sur chacune des voies $V_i$. Ensuite, l'amplitude maximale relevée est comparée par un module de comparaison de seuil relié à une mémoire de seuils. Le module d'alerte émet une alerte si l'amplitude maximale relevée sur les différentes voies dépasse le seuil indiqué pour ce type de défaut.

Dans la mémoire MEMp, l'orientation d'émission $\theta_j e(L)$ peut être avantageusement définie par un couple d'angles qui peuvent être la composante longitudinale et la composante transversale de l'angle d'émission $(\theta_N e(L)$ ; $\theta_S e(L))_i$ qui représentent respectivement l'angle entre la normale au capteur ultrasonore et la projection du tir dans un plan longitudinal, c'est-à-dire un plan contenant l'axe du produit tubulaire, et l'angle du tir entre la normale au capteur ultrasonore et la projection du tir dans un plan transversal, c'est-à-dire un plan contenant une section du produit tubulaire .

Par exemple, dans le cadre de l'inspection de la figure 9, la composante transversale de l'angle $\theta_S e(L)$ est égale à l'angle mécanique $\theta m$ du capteur et est fixe tout au long de l'inspection, à une valeur typiquement choisie à 17°, tandis que la composante longitudinale de l'angle $\theta_N e(L)$ est variable selon la position longitudinale (L) avec des valeurs comprise entre -6° et 6°. Pour une inspection de défauts de types entailles longitudinales ou trous à fond plat, l'angle mécanique $\theta m$ du capteur est choisi typiquement à 0°.

En pratique, cette décomposition est adaptée au type de capteur utilisé. Pour un transducteur linéaire multi-éléments, l'angle ne peut être modifié que dans un seul plan. Un premier angle des deux angles longitudinal et transversal est donc mécanique, et le second de ces deux angles est piloté électroniquement. Pour un transducteur matriciel multi-éléments, il est possible de piloter électroniquement ces deux angles.

Le gain $G_i(L)$ est un gain à appliquer à la position (L). Le plus souvent, le gain est sensiblement identique pour toutes les voies. Il peut être avantageux de faire varier le gain et donc de définir plusieurs gains par voie $G_i(L)$ pour chaque voie, notamment pour améliorer la détectabilité de défauts de type dédoublure. Cela permet aussi d'améliorer l'homogénéité de réponse sur des défauts obliques et avec sur des tirs d'orientation d'émission différents.

Dans un mode de réalisation préférentiel, le gain $G(L)$ est appliqué au signal correspondant à l'émission de l'onde ultrasonore.

Dans un autre mode de réalisation, le gain $G(L)$ est appliqué au signal correspondant à la réception de l'écho du tir ultrasonore. Le gain $G(L)$ de réception est alors noté $Gr(L)$. Il est plus avantageux de modifier le gain en réception $Gr(L)$ que le gain en émission $Ge(L)$ car ce dernier gain peut avoir pour désavantage d'amplifier le bruit reçu et peut donc être source de faux-positifs.

Dans une variante de réalisation, le dispositif comprend un gain en émission choisi en fonction de la voie $V_i$ et notée $Ge_i(L)$.

Dans une autre variante de réalisation, le dispositif comprend un gain de réception choisi en fonction de la voie $V_i$ et notée $Gr_i(L)$.

Dans la mémoire MEMp, la donnée représentative d'une porte de détection $FT(L)$ peut être un couplet de données indiquant le début de la porte temporelle de détection et la fin de la porte temporelle de détection.

La mémoire MEMp peut également être dotée de données représentatives de portes de détection pour chaque voie $V_i$, notées $FT_i(L)$, sous la forme de plusieurs séries de valeurs. En effet, pour une position longitudinale L, il peut y avoir i tirs d'orientations différentes, et la position des portes de détection peut devoir être adaptées de portes de détection différentes. Par ailleurs, la variation de positionnement des portes de détection permet de compenser les écarts dimensionnels d'épaisseurs de parois du produit tubulaire. Dans le cas d'un tube plus épais que la valeur nominale souhaitée, le temps de vol réel d'une onde ultrasonore est plus long. Il peut donc être avantageux de prévoir une seconde porte de détection positionnée en succession temporelle d'une première porte de détection.

De plus, selon un mode de réalisation, il est possible d'avoir deux groupes de voies $V_i$ présentant des valeurs

correspondantes sur les angles d'émission et gains appliqués, les deux groupes se différenciant principalement par la position des portes de détection $FT_i(L)$ pour permettre la détection éventuelle des défauts internes avec le premier groupe de voies $V_i$, et la détection de défauts externes avec le deuxième groupe de voies $V_i$.

| Position longitudinale L1..LX | Orientation $\theta_j e(L)$ i = 1..n | Gain émission $Ge_i(L)$ i = 1..n | Gain reception $Gr_i(L)$ i = 1..n | Portes détection $FT_i(L)$ i = 1..n |
|---|---|---|---|---|
| L 1 | $\theta_1 e(L1) = (\theta_N e(L1) ; \theta_S e(L1))_1$ | $Ge_1(L1)$ | $Gr_1(L1)$ | $FT_1(L1)= FT_{START1}(L1)$ $FT_{STOP1}(L1)$ |
| | $\theta_i e(L1) = (\theta_N e(L1) ; \theta_S e(L1))_i$ | $Ge_i(L1)$ | $Gr_i(L1)$ | $FT_i(L1)= FT_{STARTi}(L1)$ $FT_{STOPi}(L1)$ |
| | $\theta_n e(L1) = (O_{NE}(L1) ; \theta_S e(L1))_n$ | $Ge_n(L1)$ | $Gr_n(L1)$ | $FT_n(L1)= FT_{STARTn}(L1)$ $FT_{STOPn}(L1)$ |
| L2 | $\theta_1 e(L2) = (\theta_N e(L2); \Theta_S e(L2))_1$ | $Ge_1(L2)$ | $Gr_1(L2)$ | $FT_1(L2)= FT_{STARTI}(L2)$ $FT_{STOP1}(L2)$ |
| | $\theta_i e(L2) = (\theta_N e(L2) ; \theta_S e(L2))_i$ | $Ge_i(L2)$ | $Gr_i(L2)$ | $FT_i(L1)= FT_{STARTi}(L2)$ $FT_{STOPi}(L2)$ |
| | $\theta_n e(L2) = (\theta_N e(L2) ; \theta_S e(L2))_n$ | $Ge_n(L2)$ | $Gr_n(L2)$ | $FTn(L1)= FT_{STARTn}(L2)$ $FTSTOP_n(L2)$ |
| ... | ... | ... | ... | ... |
| ... | ... | ... | ... | ... |
| L X | $= (\theta_N e(LX); \theta_S e(LX))_1$ | $Ge_1(LX)$ | $Gri(LX)$ | $FT_1 (LX)= FT_{STARTI}(LX)$ $FT_{STOPI} (LX)$ |
| | $\theta_i e(LX) = (\theta_N e(LX) ; \theta se(LX))i$ | $Ge_i(LX)$ | $Gr_i(LX)$ | $FT_i(LX)= FT_{STARTI}(LX)$ $FT_{STOPi.}(LX)$ |
| | $\theta_n e(LX) = (\theta_N e(LX) ; \theta_S e(L1))_n$ | $Ge_n(LX)$ | $Gr_n(LX)$ | $FT_n(LX)= FT_{STARTn}(LX)$ $FT_{STOPn}(LX)$ |

Dans un mode de réalisation d'un banc selon l'invention adapté à inspecter un produit tubulaire avec un profil présentant uniquement des variations intentionnelles d'épaisseur sur sa circonférence, et donc sans variation intentionnelle de sa section dans la longueur dudit produit tubulaire, ou autrement dit avec une épaisseur sensiblement invariante le long d'une génératrice du produit tubulaire, la mémoire MEMP peut être organisée de manière analogue à celle du mode de réalisation précédent, en remplaçant la variable L par la variable A.

Dans un autre mode de réalisation d'un banc selon l'invention adapté à inspecter un produit tubulaire présentant des variations intentionnelles d'épaisseur à la fois le long du produit tubulaire et sur sa circonférence du produit tubulaire, la mémoire MEMP peut être organisée de manière analogue à celle du mode de réalisation détaillé précédent, en remplaçant la variable L par le couplet de variables (L ; A).

L'invention porte aussi sur une méthode de contrôle non destructif pour la détection de défauts sur des produits tubulaires à forme complexe comprenant les étapes de :

- positionner un transducteur ultrasonore 5 par rapport à un produit tubulaire complexe 3 à une première position P1 par rapport au produit tubulaire complexe 3;

- pour cette première position P1, effectuer au moins un tir ultrasonore avec un faisceau ultrasonore ayant au moins une première orientation d'émission $\theta_j e(L ; A)$, un premier gain en émission $Ge_i(P1)$, et recevoir un signal d'écho et appliquer à ce signal d'écho au moins un premier gain en réception $Gr_i(P1)$ et un premier filtre temporel $FT_i(P1)$

- positionner le transducteur ultrasonore à une deuxième position P2 par rapport au produit tubulaire complexe 3;

- pour cette deuxième position P2, effectuer au moins un deuxième tir ultrasonore avec une deuxième orientation d'émission $\theta_j e(P2)$, un deuxième gain en réception $Gr_i(P2)$ ou un deuxième gain en émission $Ge_i(P2)$, un deuxième filtre temporel $FT_i(P2)$ ;

- l'un au moins de la deuxième orientation d'émission $\theta_j e(P2)$, du deuxième gain en réception $Gr_i(P2)$, du deuxième gain en émission $Ge_i(P2)$, du deuxième filtre temporel $FT_i(P2)$ étant différent de respectivement la première orientation d'émission $\theta_j e(P1)$, le premier gain en réception $Gr_i(P1)$ ou le premier gain en émission $Ge_i(P1)$, le

premier filtre temporel $FT_i(P1)$.

Dans un mode de réalisation de ce procédé, la position P1 est une première position longitudinale L1 du capteur ultrasonore 5 et la position P2 est une deuxième position longitudinale L2 du capteur ultrasonore 5.

Ce procédé peut être appliqué à un ensemble de positions longitudinales L contiguës et formant un tronçon d'inspection. On peut alors former un premier tronçon d'inspection dans lequel les tirs ultrasonores Vi auront les mêmes paramètres de tirs formant un premier ensemble de paramètres de tir, et on peut former un autre tronçon d'inspection dans lequel les tirs ultrasonores auront un autre ensemble de paramètres de tirs, se différenciant du premier ensemble de paramètres de tirs par au moins un des paramètres parmi l'orientation d'émission $\theta_j e(L)$, le gain en réception $Gr_i(L)$, le gain en émission $Ge_i(L)$, le filtre temporel $FT_i(L)$.

On comprendra que pour une position longitudinale L, des tirs ultrasonores peuvent être effectués le long de substantiellement toute la circonférence du produit tubulaire, par exemple sur 360° avec un tir réparti régulièrement par incrément angulaire compris entre 1° et 15°, effectuant des tirs à des localisations du transducteur ultrasonore 5 déterminées par une position longitudinale L et une position circonférentielle A.

Dans un second mode de réalisation de ce procédé, la position P1 est une première position circonférentielle A1 du capteur ultrasonore 5 et la position P2 est une deuxième position circonférentielle A2 du capteur ultrasonore 5.

Dans un troisième mode de réalisation de ce procédé, la position P1 est une première position longitudinale L1 et circonférentielle A1 du capteur ultrasonore 5 et la position P2 est une deuxième position longitudinale L2 et circonférentielle A2 du capteur ultrasonore 5.

On comprendra que l'on peut effectuer pour une position du transducteur ultrasonore 5 à une position longitudinale L et une position circonférentielle A données, une série de tirs ultrasonores en faisant varier entre chaque tir au moins un paramètre parmi l'orientation d'émission $\theta_j e(L ; A)$, le gain en réception $Gr_i(L ; A)$, le gain en émission $Ge_i(L ; A)$, le filtre temporel $FT_i(L ; A)$. Préférentiellement, on fait varier l'orientation d'émission $\theta_j e(L)$ entre une valeur minimale $\theta_{min} e(L ; A)$ et une valeur maximale $\theta_{max} e(L ; A)$. Ceci permet d'améliorer la détection de défaut malgré des imperfections géométriques non intentionnelles (ovalité, excentration) du produit tubulaire.

**Revendications**

1. Dispositif automatique de contrôle non-destructif pour la détection de défauts d'un produit tubulaire complexe (3), ledit produit tubulaire complexe (3) présentant des variations de diamètres extérieurs et/ou de diamètres intérieurs, ledit dispositif comprenant :

   - au moins un transducteur ultrasonore (5) ayant une position définie par une position longitudinale (L) et une position circonférentielle (A) le long du produit tubulaire complexe (3) et agencé pour émettre un faisceau ultrasonore (Em) ayant une orientation d'émission ($\theta ei(L, A)$);
   - une électronique de commande et de traitement (6) comprenant un circuit pour exciter le transducteur ultrasonore et capter des signaux de retour et
   - au moins un étage d' amplification (21,31) avec un gain ($G_i(L ; A)$),
   - un module de filtre temporel (24) configuré pour appliquer un filtre temporel ($FTi (L ; A)$) sur un signal d'écho (Dv, Ds), **caractérisé en ce que** l'électronique de commande et de traitement (6) est configurée pour définir au moins un paramètre de tirs ultrasonores (Vi) en fonction de la position longitudinale (L) et/ ou circonférentielle (A) du transducteur ultrasonore déterminée et renvoyée par un module de positionnement (23) dudit dispositif de manière à capter des défauts dans la paroi du produit tubulaire complexe, ledit au moins un paramètre comportant 1' orientation d'émission du tir ($\theta ei(L, A)$).

2. Dispositif selon la revendication 1, **caractérisé en ce que** l'électronique de commande et de traitement (6) est configurée pour définir au moins deux paramètres de tirs ultrasonores (Vi) en fonction de la position circonférentielle (A) du au moins un transducteur ultrasonore (5) de manière à capter des défauts dans la paroi du produit tubulaire complexe, lesdits au moins deux paramètres comportant l'orientation d'émission du tir ($\theta e_i(L, A)$) et un paramètre choisi parmi le gain ($Gi (L ; A)$) ou la position et largeur de fenêtre temporelle ($Fei (L ; A)$ dans le filtre temporel ($FTi (L ; A)$) dans laquelle le signal d'écho (Dv, Ds) est présent.

3. Dispositif selon la revendication 1, **caractérisé en ce que** l'électronique de commande et de traitement (6) est configurée pour définir au moins deux paramètres de tirs ultrasonores (Vi) en fonction de la position longitudinale (L) du au moins un transducteur ultrasonore (5) de manière à capter des défauts dans la paroi du produit tubulaire complexe, lesdits au moins deux paramètres comportant l'orientation d'émission du tir ($\theta e_i(L, A)$) et un paramètre choisi parmi le gain ($G_i(L ; A)$) ou la position et largeur de fenêtre temporelle ($Fei (L ; A)$ dans le filtre temporel ($FTi (L ; A)$)

dans laquelle le signal d'écho (Dv, Ds) est présent.

4. Dispositif selon la revendication 3, **caractérisé en ce que** l'électronique de commande et de traitement (6) est configurée pour définir l'orientation d'émission du tir ($\theta e_i$(L, A)), le gain (Gi (L ; A)) et la position et largeur de fenêtre temporelle (Fei (L ; A)dans le filtre temporel (FTi (L ; A)) dans laquelle le signal d'écho (Dv, Ds) est présent de tirs ultrasonores (Vi) en fonction de la position longitudinale (L) du au moins un transducteur ultrasonore (5).

5. Dispositif selon l'une des revendications 3 à 4, **caractérisé en ce que** l'électronique de commande et de traitement (6) est configurée pour aussi définir au moins un paramètre choisi parmi l'orientation d'émission du tir ($\theta e_i$(L, A)), le gain (Gi (L ; A)) et la position et largeur de fenêtre temporelle (Fei (L ;A)dans le filtre temporel (FTi (L ; A)) dans laquelle le signal d'écho (Dv, Ds) est présent de tirs ultrasonores (Vi) en fonction de la position circonférentielle (A) du au moins un transducteur ultrasonore (5).

6. Dispositif selon l'une des revendications 1 à 5, comprenant au moins un capteur de position (7a) pour déterminer la position longitudinale (L) du au moins un transducteur ultrasonore (5) relativement par rapport au produit tubulaire complexe (3).

7. Dispositif selon l'une des revendications 1 à 5, comprenant au moins un capteur de position (7a) pour déterminer la position longitudinale (L) et la position circonférentielle (A) du au moins un transducteur ultrasonore 5 relativement par rapport au produit tubulaire complexe (3).

8. Dispositif selon la revendication 6 ou 7, dans lequel le au moins un capteur de position (7 a) est choisi parmi un codeur incrémental, un codeur à roue crémaillère, un codeur linéaire, un codeur à fil, un vélocimètre laser, une roue codeuse ou un rapport de roue codeuse.

9. Dispositif selon l'une des revendications 1 à 5, comprenant au moins un temporisateur (7b) pour déterminer la position relative longitudinale (L) et circonférentielle (A) du transducteur ultrasonore (5).

10. Dispositif selon l'une des revendications précédentes, dans lequel le au moins un étage d'amplification (21, 31) est un étage d'amplification en émission (21) ayant un gain en émission (Gei (L ; A)) et l'électronique de commande et de traitement (6) est configurée pour faire varier ledit gain en émission (Gei (L ; A)) en fonction de la position longitudinale (L) du transducteur ultrasonore (5).

11. Dispositif selon l'une des revendications précédentes, dans lequel le au moins un étage d'amplification (21, 31) est un étage d'amplification en réception (31) ayant un gain en réception (Gri (L ; A)) et l'électronique de commande et de traitement (6) est configurée pour faire varier ledit gain en réception (Gri (L ; A)) en fonction de la position longitudinale (L) du transducteur ultrasonore (5).

12. Dispositif selon l'une des revendications 1 à 9, comprenant un étage d'amplification en émission (21) ayant un gain en émission (Gei (L ; A)) et un étage d'amplification en réception (31) ayant un gain en réception (Gri (L; A)) et dans lequel l'électronique de commande et de traitement (6) est configurée pour faire varier le gain en émission (Gei (L ; A)) ou le gain en réception (Gri (L ; A)) en fonction de la position longitudinale (L) du transducteur ultrasonore (5).

13. Dispositif selon l'une des revendications 1 à 12, dans lequel l'électronique de commande et de traitement (6) comprend un module de mémoire paramétrique (MEMp) capable de stocker des données sous forme d'association entre au moins une position longitudinale (L) d'un au moins transducteur ultrasonore (5) et au moins un jeu de données correspondant à des paramètres d'orientation d'émission du tir ($\theta e_i$(L, A)), de gain (Gi (L ; A)) et/ou de la position et largeur de fenêtre temporelle (Fei (L ; A) dans le filtre temporel (FTi (L ; A)) dans laquelle le signal d'écho (Dv, Ds) est présent.

14. Dispositif selon l'une des revendications 1 à 12, dans lequel l'électronique de commande et de traitement (6) comprend un module de mémoire paramétrique (MEMp) capable de stocker des données sous forme d'association entre au moins une position circonférentielle (A) d'un au moins transducteur ultrasonore (5) et au moins un jeu de données correspondant à des paramètres d'orientation d'émission du tir ($\theta e_i$(L, A)), de gain (Gi(L ; A)) et/ou de la position et largeur de fenêtre temporelle (Fei (L ;A) dans le filtre temporel (FTi (L ; A)) dans laquelle le signal d'écho (Dv, Ds) est présent.

15. Dispositif selon l'une des revendications 1 à 12, dans lequel l'électronique de commande et de traitement (6) comprend un module de mémoire paramétrique (MEMp) capable de stocker des données sous forme d'association entre des couplets de position longitudinale et circonférentielle (L ; A) du transducteur ultrasonore (5) et au moins un jeu de données correspondant à des paramètres d'orientation d' émission du tir ($\theta e_i$(L, A)), de gain (Gi (L ; A)) et de la position et largeur de fenêtre temporelle (Fei (L ;A) dans le filtre temporel (FTi (L ; A)) dans laquelle le signal d'écho (Dv, Ds) est présent.

16. Dispositif selon l'une des revendications 13 à 15, dans lequel le module de mémoire paramétrique (MEMp) comprend au moins un jeu de données correspondant à des paramètres de gain (Gi(L ; A)) sous la forme de paramètres de gain en réception (Gei (L ; A)) et de gain en émission (Gri (L ; A)).

17. Dispositif selon 1'une des revendications précédentes, **caractérisé en ce que** l' électronique de commande et de traitement (6) est configurée pour émettre plusieurs tirs ultrasonores (Vi) pour une position du transducteur ultrasonore (5), les tirs ultrasonores (Vi) ayant des angles d'émission ($\theta ej$(L)) compris entre un angle d'orientation minimal de position ($\theta e_{mini}$(L)) et un angle d'orientation maximal de position ($\theta e_{max_i}$(L)).

18. Dispositif selon la revendication précédente, **caractérisé en ce que** l'électronique de commande et de traitement (6) est agencée pour effectuer de 2 à 8 tirs ultrasonores (Vi) pour une position du au moins un transducteur ultrasonore (5).

19. Dispositif selon l'une quelconque des revendications précédentes, dans lequel au moins un transducteur ultrasonore (5) est une barre de transducteurs ultrasonores.

20. Dispositif selon l'une quelconque des revendications précédentes, dans lequel au moins un transducteur ultrasonore (5) est un capteur à réseau de phase.

21. Procédé automatique de contrôle de produits tubulaires à diamètres extérieur ou intérieur variant au moyen d'un dispositif selon l'une des revendications précédentes, dans lequel :

   a. on positionne au moins un transducteur ultrasonore (5) à une première position (PI) ;
   b. on effectue un premier tir ultrasonore (Vi) en émettant un faisceau ultrasonore (Em) ayant une première orientation ($\theta e_i$(PI)), et une première amplification en émission avec un premier gain en émission (Gei (PI)) ; la première orientation ($\theta ei$(PI)) et le premier gain en émission (Gei (PI)) étant des paramètres d'émission du premier tir ultrasonore (Vi)
   c. on capte un écho renvoyé par le produit tubulaire complexe (3) et on transforme l'écho capté en un signal reçu auquel est appliqué un premier gain en réception (Gri (PI)) ;
   d. On isole une partie du signal dans une première fenêtre temporelle (FTi (PI)), le premier gain en réception (Gri (PI)) et la première fenêtre temporelle (FTi (PI)) étant des paramètres de réception dudit premier tir ultrasonore (Vi) ;
   e. On effectue un deuxième tir ultrasonore en répétant les étapes a à d à une deuxième position (P2), avec des paramètres d' émission du deuxième tir ultrasonore comprenant une deuxième orientation ($\theta e_i$(P2)), un deuxième gain émission (Gei (P2)) et des paramètres de réception du deuxième tir ultrasonore comprenant un deuxième gain en réception (Gri (P2)) et une deuxième fenêtre temporelle (FTi (P2)), **caractérisée en ce que** la deuxième orientation ($\theta e_i$(P2)) est différente de la première orientation ($\theta e_i$(PI)).

**Patentansprüche**

1. Automatische Vorrichtung zur zerstörungsfreien Prüfung zur Erkennung von Fehlern eines komplexen rohrförmigen Produkts (3), wobei das komplexe rohrförmige Produkt (3) Außendurchmesser- und/oder Innendurchmesseränderungen aufweist, die Vorrichtung umfassend:

   - mindestens einen Ultraschallwandler (5), der eine durch eine Längsposition (L) und eine Umfangsposition (A) entlang des komplexen rohrförmigen Produkts (3) definierte Position hat und so ausgebildet ist, dass er einen Ultraschallstrahl (Em) sendet, der eine Sendeausrichtung ($\theta e_i$(L, A)) hat;
   - eine Steuer- und Verarbeitungselektronik (6), die eine Schaltung zum Anregen des Ultraschallwandlers und Erfassen der Rücksignale umfasst, und
   - mindestens eine Verstärkungsstufe (21, 31) mit einem Verstärkungsfaktor ($G_i$ (L; A)),
   - ein Zeitfiltermodul (24), das dazu ausgestaltet ist, ein Zeitfilter ($FT_i$ (L; A)) auf ein Echosignal (Dv, Ds) anzuwenden, **dadurch gekennzeichnet, dass** die Steuer- und Verarbeitungselektronik (6) dazu ausgestaltet ist, mindestens einen Parameter von Ultraschallschüssen (Vi) in Abhängigkeit von der Längs- (L) und/oder Umfangsposition (A) des Ultraschallwandlers, die durch ein Positionierungsmodul (23) der Vorrichtung bestimmt und zurückgesendet wird, zu definieren, so dass Fehler in der Wand des komplexen rohrförmigen Produkts erfasst werden, wobei der mindestens eine Parameter die Sendeausrichtung des Schusses ($\theta ei(L, A)$) beinhaltet.

2. Vorrichtung nach Anspruch 1, **dadurch gekennzeichnet, dass** die Steuer- und Verarbeitungselektronik (6) dazu ausgestaltet ist, mindestens zwei Parameter von Ultraschallschüssen (Vi) in Abhängigkeit von der Umfangsposition (A) des mindestens einen Ultraschallwandlers (5) zu definieren, so dass Fehler in der Wand des komplexen rohrförmigen Produkts erfasst werden, wobei die mindestens zwei Parameter die Sendeausrichtung des Schusses ($\theta ei(L, A)$) und einen Parameter, der aus dem Verstärkungsfaktor ($G_i$ (L; A)) oder der Position und Breite des Zeitfensters ($Fe_i$ (L; a)) in dem Zeitfilter ($FT_i$ (L; A)), in dem das Echo-Signal (Dv, Ds) vorhanden ist, gewählt ist, beinhalten.

3. Vorrichtung nach Anspruch 1, **dadurch gekennzeichnet, dass** die Steuer- und Verarbeitungselektronik (6) dazu ausgestaltet ist, mindestens zwei Parameter von Ultraschallschüssen (Vi) in Abhängigkeit von der Längsposition (L) des mindestens einen Ultraschallwandlers (5) zu definieren, so dass Fehler in der Wand des komplexen rohrförmigen Produkts erfasst werden, wobei die mindestens zwei Parameter die Sendeausrichtung des Schusses ($\theta ei(L, A)$) und einen Parameter, der aus dem Verstärkungsfaktor ($G_i$ (L; A)) oder der Position und Breite des Zeitfensters ($Fe_i$ (L; a)) in dem Zeitfilter ($FT_i$ (L; A)), in dem das Echo-Signal (Dv, Ds) vorhanden ist, gewählt ist, beinhalten.

4. Vorrichtung nach Anspruch 3, **dadurch gekennzeichnet, dass** die Steuer- und Verarbeitungselektronik (6) dazu ausgestaltet ist, die Sendeausrichtung des Schusses ($\theta e_i$ (L, A)), den Verstärkungsfaktor ($G_i$ (L; A) und die Position und Breite des Zeitfensters ($Fe_i$ (L; A) in dem Zeitfilter ($FT_i$ (L; A)), in dem das Echo-Signal (Dv, Ds) vorhanden ist, von Ultraschallschüssen (Vi) in Abhängigkeit von der Längsposition (L) des mindestens einen Ultraschallwandlers (5) zu definieren.

5. Vorrichtung nach einem der Ansprüche 3 bis 4, **dadurch gekennzeichnet, dass** die Steuer- und Verarbeitungselektronik (6) dazu ausgestaltet ist, auch mindestens einen Parameter, der aus der Sendeausrichtung des Schusses ($\theta ei(L, A)$), dem Verstärkungsfaktor ($G_i$ (L; A) und der Position und Breite des Zeitfensters ($Fe_i$ (L; A) in dem Zeitfilter ($FT_i$ (L; A)), in dem das Echo-Signal (Dv, Ds) vorhanden ist, gewählt ist, von Ultraschallschüssen (Vi) in Abhängigkeit von der Umfangsposition (A) des mindestens einen Ultraschallwandlers (5) zu definieren.

6. Vorrichtung nach einem der Ansprüche 1 bis 5, umfassend mindestens einen Positionssensor (7a) zum Bestimmen der Längsposition (L) des mindestens einen Ultraschallwandlers (5) relativ zu dem komplexen rohrförmigen Produkt (3).

7. Vorrichtung nach einem der Ansprüche 1 bis 5, umfassend mindestens einen Positionssensor (7a) zum Bestimmen der Längsposition (L) und der Umfangsposition (A) des mindestens einen Ultraschallwandlers 5 relativ zu dem komplexen rohrförmigen Produkt (3).

8. Vorrichtung nach Anspruch 6 oder 7, wobei der mindestens eine Positionssensor (7a) aus einem Inkremental-Encoder, einem Zahnrad-Zahnstange-Encoder, einem Linear-Encoder, einem Draht-Encoder, einem Laser-Geschwindigkeitsmesser, einem Codierrad oder einem Codierradverhältnis gewählt ist.

9. Vorrichtung nach einem der Ansprüche 1 bis 5, umfassend mindestens ein Zeitglied (7b) zum Bestimmen der relativen Längs- (L) und Umfangsposition (A) des Ultraschallwandlers (5).

10. Vorrichtung nach einem der vorhergehenden Ansprüche, wobei die mindestens eine Verstärkungsstufe (21, 31) eine Sendeverstärkungsstufe (21) ist, die einen Sendeverstärkungsfaktor ($Ge_i$ (L; a)) hat, und die Steuer- und Verarbeitungselektronik (6) dazu ausgestaltet ist, den Sendeverstärkungsfaktor ($Ge_i$ (L; A)) in Abhängigkeit von der Längsposition (L) des Ultraschallwandlers (5) variieren zu lassen.

11. Vorrichtung nach einem der vorhergehenden Ansprüche, wobei die mindestens eine Verstärkungsstufe (21, 31) eine Empfangsverstärkungsstufe (31) ist, die einen Empfangsverstärkungsfaktor ($Gr_i$ (L; A)) hat, und die Steuer- und Verarbeitungselektronik (6) dazu ausgestaltet ist, den Empfangsverstärkungsfaktor ($Gr_i$ (L; A)) in Abhängigkeit von der Längsposition (L) des Ultraschallwandlers (5) variieren zu lassen.

12. Vorrichtung nach einem der Ansprüche 1 bis 9, die eine Sendeverstärkungsstufe (21), die einen Sendeverstärkungsfaktor ($Ge_i$ (L; A)) hat, und eine Empfangsverstärkungsstufe (31), die einen Empfangsverstärkungsfaktor ($Gr_i$ (L; A)) hat, umfasst und bei der die Steuer- und Verarbeitungselektronik (6) dazu ausgestaltet ist, den Sendeverstärkungsfaktor ($Ge_i$ (L; A)) oder den Empfangsverstärkungsfaktor ($Gr_i$ (L) in Abhängigkeit von der Längsposition (L) des Ultraschallwandlers (5) variieren zu lassen.

13. Vorrichtung nach einem der Ansprüche 1 bis 12, wobei die Steuer- und Verarbeitungselektronik (6) ein parametrisches Speichermodul (MEMp) umfasst, das in der Lage ist, Daten in Form einer Zuordnung zwischen mindestens einer Längsposition (L) mindestens eines Ultraschallwandlers (5) und mindestens einem Datensatz, der Parametern einer Sendeausrichtung des Schusses ($\theta e_i$(L, A)), eines Verstärkungsfaktors ($G_i$ (L; A)) und/oder der Position und Breite des Zeitfensters ($Fe_i$ (L; A) in dem Zeitfilter ($FT_i$ ($_L$; L; A)), in dem das Echo-Signal (Dv, Ds) vorhanden ist, entspricht, zu speichern.

14. Vorrichtung nach einem der Ansprüche 1 bis 12, wobei die Steuer- und Verarbeitungselektronik (6) ein parametrisches Speichermodul (MEMp) umfasst, das in der Lage ist, Daten in Form einer Zuordnung zwischen mindestens einer Umfangsposition (A) mindestens eines Ultraschallwandlers (5) und mindestens einem Datensatz, der Parametern einer Sendeausrichtung des Schusses ($\theta ei$(L, A)), eines Verstärkungsfaktors ($G_i$ (L; A)) und/oder der Position und Breite des Zeitfensters ($Fe_i$ (L; A) in dem Zeitfilter ($FT_i$ ($_L$; L; A)), in dem das Echo-Signal (Dv, Ds) vorhanden ist, entspricht, zu speichern.

15. Vorrichtung nach einem der Ansprüche 1 bis 12, wobei die Steuer- und Verarbeitungselektronik (6) ein parametrisches Speichermodul (MEMp) umfasst, das in der Lage ist, Daten in Form einer Zuordnung zwischen Paaren aus Längs- und Umfangsposition (L; A) des Ultraschallwandlers (5) und mindestens einem Datensatz, der Parametern einer Sendeausrichtung des Schusses ($\theta ei$(L, A)), eines Verstärkungsfaktors ($G_i$ (L; A)) und/oder der Position und Breite des Zeitfensters ($Fe_i$ (L; A) in dem Zeitfilter ($FT_i$ ($_L$; L; A)), in dem das Echo-Signal (Dv, Ds) vorhanden ist, entspricht, zu speichern.

16. Vorrichtung nach einem der Ansprüche 13 bis 15, wobei das parametrische Speichermodul (MEMp) mindestens einen Datensatz umfasst, der Parametern eines Verstärkungsfaktors ($G_i$ (L; A) in Form von Parametern eines Empfangsverstärkungsfaktors ($Ge_i$ (L; A)) und eines Sendeverstärkungsfaktors ($Gr_i$ (L; A)) entspricht.

17. Vorrichtung nach einem der vorhergehenden Ansprüche, **dadurch gekennzeichnet, dass** die Steuer- und Verarbeitungselektronik (6) dazu ausgestaltet ist, mehrere Ultraschallschüsse (Vi) für eine Position des Ultraschallwandlers (5) zu senden, wobei die Ultraschallschüsse (VI) Sendewinkel ($\theta e_j$(L)) zwischen einem minimalen Positionsausausrichtungswinkel ($\theta e_{mini}$(L)) und einem maximalen Positionsausausrichtungswinkel ($\theta e_{maxi}$(L)) haben.

18. Vorrichtung nach dem vorhergehenden Anspruch, **dadurch gekennzeichnet, dass** die Steuer- und Verarbeitungselektronik (6) dazu ausgebildet ist, 2 bis 8 Ultraschallschüsse (Vi) für eine Position des mindestens einen Ultraschallwandlers (5) vorzunehmen.

19. Vorrichtung nach einem der vorhergehenden Ansprüche, wobei mindestens ein Ultraschallwandler (5) eine Ultraschallwandlerleiste ist.

20. Vorrichtung nach einem der vorhergehenden Ansprüche, wobei mindestens ein Ultraschallwandler (5) ein Phased-Array-Sensor ist.

21. Automatisches Verfahren zur Prüfung von rohrförmigen Produkten mit variierenden Außen- oder Innendurchmessern mithilfe einer Vorrichtung nach einem der vorhergehenden Ansprüche, bei dem:

   a. mindestens ein Ultraschallwandler (5) an einer ersten Position (PI) positioniert wird;
   b. ein erster Ultraschallschuss (VI) vorgenommen wird, indem ein Ultraschallstrahl (EM) gesendet wird, der eine erste Ausrichtung ($\theta e_i$(P1)) und eine erste Sendeverstärkung mit einem ersten Sendeverstärkungsfaktor ($Ge_i$ (P1)) hat; wobei die erste Ausrichtung ($\theta e_i$(P1.) und der erste Sendeverstärkungsfaktor ($Ge_i$ (P1)) Sendeparameter des ersten Ultraschallschusses (Vi) sind
   c. ein von dem komplexen rohrförmigen Produkt (3) zurückgesendetes Echo erfasst wird und das erfasste Echo in ein empfangenes Signal umgewandelt wird, auf das ein erster Empfangsverstärkungsfaktor ($Gr_i$ (P1)) angewendet wird;
   d. ein Teil des Signals in einem ersten Zeitfenster ($FT_i$ (P1)) isoliert wird, wobei der erste Empfangsverstärkungs-

faktor ($Gr_i$ (P1)) und das erste Zeitfenster ($FT_i$ (P1)) Empfangsparameter des ersten Ultraschallschusses (Vi) sind;

e. ein zweiter Ultraschallschuss vorgenommen wird, indem die Schritte a bis d an einer zweiten Position (P2) mit Sendeparametern des zweiten Ultraschallschusses, die eine zweite Ausrichtung ($\theta e_i$(P2)), einen zweiten Sendeverstärkungsfaktor ($Ge_i$ (P2)) umfassen, und Empfangsparametern des zweiten Ultraschallschusses, die einen zweiten Empfangsverstärkungsfaktor ($Gr_i$ (P2)) und ein zweites Zeitfenster ($FT_i$ (P2)) umfassen, wiederholt werden, **dadurch gekennzeichnet, dass** die zweite Ausrichtung ($\theta e_i$(P2)) von der ersten Ausrichtung ($\theta e_i$(P1)) verschieden ist.

**Claims**

1. Automatic non-destructive testing device for detecting defects in a complex tubular product (3), said complex tubular product (3) exhibiting variations in outside diameters and/or inside diameters, said device comprising:

   - at least one ultrasonic transducer (5) having a position defined by a longitudinal position (L) and a circumferential position (A) along the complex tubular product (3) and arranged to transmit an ultrasonic beam (Em) having a transmission orientation ($\theta e_i$(L, A));
   - control and processing electronics (6) comprising a circuit for exciting the ultrasonic transducer and detecting return signals; and
   - at least one amplification stage (21, 31) with a gain ($G_i$(L; A));
   - a time-domain filter module (24) configured to apply a time-domain filter ($FT_i$(L; A)) to an echo signal (Dv, Ds), **characterized in that** the control and processing electronics (6) are configured to define at least one ultrasonic shot parameter (Vi) depending on the longitudinal position (L) and/or circumferential position (A) of the ultrasonic transducer, which position(s) are determined and delivered by a module (23) for positioning said device, so as to detect defects in the wall of the complex tubular product, said at least one parameter comprising the orientation of transmission of the shot ($\theta e_i$(L, A)).

2. Device according to Claim 1, **characterized in that** the control and processing electronics (6) are configured to define at least two ultrasonic shot parameters (Vi) depending on the circumferential position (A) of the at least one ultrasonic transducer (5) so as to detect defects in the wall of the complex tubular product, said at least two parameters comprising the orientation of transmission of the shot ($\theta e_i$(L, A)) and a parameter selected from the gain ($G_i$(L; A)) or the position and width, in the time-domain filter ($FT_i$(L; A)), of the time window ($Fe_i$(L; A)) in which the echo signal (Dv, Ds) is present.

3. Device according to Claim 1, **characterized in that** the control and processing electronics (6) are configured to define at least two ultrasonic shot parameters (Vi) depending on the longitudinal position (L) of the at least one ultrasonic transducer (5) so as to detect defects in the wall of the complex tubular product, said at least two parameters comprising the orientation of transmission of the shot ($\theta e_i$(L, A)) and a parameter selected from the gain ($G_i$(L; A)) or the position and width, in the time-domain filter ($FT_i$(L; A)), of the time window ($Fe_i$(L; A)) in which the echo signal (Dv, Ds) is present.

4. Device according to Claim 3, **characterized in that** the control and processing electronics (6) are configured to define the orientation of transmission of the shot ($\theta e_i$(L, A)), the gain ($G_i$(L; A)) and the position and width, in the time-domain filter ($FT_i$(L; A)), of the time window ($Fe_i$(L; A)) in which the echo signal (Dv, Ds) of ultrasonic shots (Vi) is present depending on the longitudinal position (L) of the at least one ultrasonic transducer (5).

5. Device according to either of Claims 3 and 4, **characterized in that** the control and processing electronics (6) are configured to also define at least one parameter selected from the orientation of transmission of the shot ($\theta e_i$(L, A)), the gain ($G_i$(L; A)) and the position and width, in the time-domain filter ($FT_i$(L; A)), of the time window ($Fe_i$(L; A)) in which the echo signal (Dv, Ds) of ultrasonic shots (Vi) is present depending on the circumferential position (A) of the at least one ultrasonic transducer (5).

6. Device according to any of Claims 1 to 5, comprising at least one position sensor (7a) for determining the longitudinal position (L) of the at least one ultrasonic transducer (5) relative to the complex tubular product (3).

7. Device according to any of Claims 1 to 5, comprising at least one position sensor (7a) for determining the longitudinal position (L) and circumferential position (A) of the at least one ultrasonic transducer (5) relative to the complex tubular product (3).

8. Device according to either of Claims 6 and 7, wherein the at least one position sensor (7a) is selected from an incremental encoder, a rack-and-pinion encoder, a linear encoder, a draw-wire encoder, a laser velocimeter, a coding wheel or a coding-wheel ratio.

9. Device according to any of Claims 1 to 5, comprising at least one timer (7b) for determining the relative longitudinal position (L) and relative circumferential position (A) of the ultrasonic transducer (5).

10. Device according to any of the preceding claims, wherein the at least one amplification stage (21, 31) is a transmit amplification stage (21) having a transmit gain ($Ge_i(L; A)$) and the control and processing electronics (6) are configured to make said transmit gain ($Ge_i(L; A)$) vary depending on the longitudinal position (L) of the ultrasonic transducer (5).

11. Device according to any of the preceding claims, wherein the at least one amplification stage (21, 31) is a receive amplification stage (31) having a receive gain ($Gr_i(L; A)$) and the control and processing electronics (6) are configured to make said receive gain ($Gr_i(L; A)$) vary depending on the longitudinal position (L) of the ultrasonic transducer (5).

12. Device according to any of Claims 1 to 9, comprising a transmit amplification stage (21) having a transmit gain ($Ge_i(L; A)$) and a receive amplification stage (31) having a receive gain ($Gr_i(L; A)$) and wherein the control and processing electronics (6) are configured to make the transmit gain ($Ge_i(L; A)$) or the receive gain ($Gr_i(L; A)$) vary depending on the longitudinal position (L) of the ultrasonic transducer (5).

13. Device according to any of Claims 1 to 12, wherein the control and processing electronics (6) comprise a parametric memory module (MEMp) capable of storing data in the form of an association between at least one longitudinal position (L) of at least one ultrasonic transducer (5) and at least one data set corresponding to parameters in respect of orientation of transmission of the shot ($\theta e_i(L, A)$), gain ($G_i(L; A)$) and/or the position and width, in the time-domain filter ($FT_i(L; A)$), of the time window ($Fe_i(L; A)$) in which the echo signal (Dv, Ds) is present.

14. Device according to any of Claims 1 to 12, wherein the control and processing electronics (6) comprise a parametric memory module (MEMp) capable of storing data in the form of an association between at least one circumferential position (A) of at least one ultrasonic transducer (5) and at least one data set corresponding to parameters in respect of orientation of transmission of the shot ($\theta e_i(L, A)$), gain ($G_i(L; A)$) and/or the position and width, in the time-domain filter ($FT_i(L; A)$), of the time window ($Fe_i(L; A)$) in which the echo signal (Dv, Ds) is present.

15. Device according to any of Claims 1 to 12, wherein the control and processing electronics (6) comprise a parametric memory module (MEMp) capable of storing data in the form of an association between pairs of longitudinal and circumferential positions (L; A) of the ultrasonic transducer (5) and at least one data set corresponding to parameters in respect of orientation of transmission of the shot ($\theta e_i(L, A)$), gain ($G_i(L; A)$) and the position and width, in the time-domain filter ($FT_i(L; A)$), of the time window ($Fe_i(L; A)$) in which the echo signal (Dv, Ds) is present.

16. Device according to any of Claims 13 to 15, wherein the parametric memory module (MEMp) comprises at least one data set corresponding to gain parameters ($G_i(L; A)$) taking the form of parameters in respect of receive gain ($Ge_i(L; A)$) and transmit gain ($Gr_i(L; A)$).

17. Device according to any of the preceding claims, **characterized in that** the control and processing electronics (6) are configured to transmit a plurality of ultrasonic shots (Vi) for a position of the ultrasonic transducer (5), the ultrasonic shots (Vi) having transmission angles ($\theta e_j(L)$) between a minimum positional angle of orientation ($\theta e_{mini}(L)$) and a maximum positional angle of orientation ($\theta e_{maxi}(L)$).

18. Device according to the preceding claim, **characterized in that** the control and processing electronics (6) are arranged to fire from 2 to 8 ultrasonic shots (Vi) for a position of the at least one ultrasonic transducer (5).

19. Device according to any of the preceding claims, wherein at least one ultrasonic transducer (5) is a strip of ultrasonic transducers.

20. Device according to any of the preceding claims, wherein at least one ultrasonic transducer (5) is a phased array sensor.

21. Automatic method for testing tubular products with varying outside or inside diameters by means of a device according to any of the preceding claims, wherein:

   a. at least one ultrasonic transducer (5) is positioned in a first position (PI);
   b. a first ultrasonic shot (Vi) is fired by transmitting an ultrasonic beam (Em) having a first orientation ($\theta e_i(P1)$), and a first transmit amplification with a first transmit gain ($Ge_i(P1)$), the first orientation ($\theta e_i(P1)$) and the first transmit gain ($Ge_i(P1)$) being transmission parameters of the first ultrasonic shot (Vi);
   c. an echo reflected by the complex tubular product (3) is detected and the detected echo is converted into a received signal to which a first receive gain ($Gr_i(P1)$) is applied;
   d. a portion of the signal is isolated in a first time window ($FT_i(P1)$), the first receive gain ($Gr_i(P1)$) and the first time window ($FT_i(P1)$) being reception parameters of said first ultrasonic shot (Vi);
   e. a second ultrasonic shot is fired by repeating steps a to d in a second position (P2), with transmission parameters of the second ultrasonic shot comprising a second orientation ($\theta e_i(P2)$) and a second transmit gain ($Ge_i(P2)$) and reception parameters of the second ultrasonic shot comprising a second reception gain ($Gr_i(P2)$) and a second time window ($FT_i(P2)$), **characterized in that** the second orientation ($\theta e_i(P2)$) is different from the first orientation ($\theta e_i(P1)$).

**Fig.1**

**Fig.2**

**Fig. 3**

**Fig. 4**

$$a = g \times \tan(\theta e)$$
$$b = h \times \tan(\theta r + \alpha)$$

**Fig. 5**

**Fig 6a**

**Fig 6b**

**Fig 6c**

**Fig 7a**

**Fig 7b**

**Fig. 7c**

**Fig. 7d**

**Fig. 7e**

**Fig. 8a**

**Fig. 8b**

**Fig. 8c**

**93**     Fig. 9a     **94**

**96**     A     B     C

SNR     13dB     13dB     12dB

**95**    1    Fig. 9b    2    3

Orientation (°)     97

Position porte (mm eau)     98

Gain supplémentaire dB     99

Fig. 9c

**Fig. 9**

Fig. 10

Fig. 11a
Fig. 11b
Fig. 11c

Fig. 11

**Fig. 12**

Fig. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014096700 A
- WO 200350527 A
- FR 2917832 A1
- FR 3000212
- FR 2796153